# EUROPEAN PATENT APPLICATION

(11) **EP 4 383 519 A1**
(43) Date of publication of application: **12.06.2024**
(21) Application number: 23213820.6
(22) Date of filing: 01.12.2023
(51) Int. Cl.: H02J 50/12, H02J 50/80

(54) **METHOD AND CIRCUITRY FOR CONTROLLING A TRANSMITTER AND A RECEIVER OF A WIRELESS POWER TRANSFER SYSTEM**

(30) Priority: 01.12.2022 US 202263429293 P
(71) Applicant: Solace Power Inc., Mount Pearl, Newfoundland and Labrador A1N 5E7 (CA)
(72) Inventor: ARSENAULT, Paul, Mount Pearl, A1N 5E7 (CA); THORSEN, Daniel, Mount Pearl, A1N 5E7 (CA); RYAN, Bernard, Mount Pearl, A1N 5E7 (CA); HICKEY, Mark, Mount Pearl, A1N 5E7 (CA); TURNBULL, Robert, Mount Pearl, A1N 5E7 (CA); YOUNG, Nicholas, Mount Pearl, A1N 5E7 (CA)
(74) Representative: Marks & Clerk LLP

(57) **Abstract**

There is provided transmitter control circuitry for controlling a duty cycle of an inverter of a transmitter of a wireless power transfer system based on detection of a load signal at the transmitter. There is further provided receiver control circuitry for controlling operation of a receiver of a wireless power transfer system, the circuitry modifying of the load at the input or output of a rectifier of a receiver of a wireless power transfer system to vary a load signal at the receiver. The transmitter control circuitry may control the duty cycle of the inverter based on detection of the load signal from the receiver.

## Description

### Technical Field

The present disclosure relates generally to wireless power transfer, and in particular, to methods and circuitry for controlling a transmitter and receiver of a wireless power transfer system.

### Background

Wireless power transfer systems such as wireless charging are becoming an increasingly important technology to enable the next generation of devices. The potential benefits and advantages offered by the technology is evident by the increasing number of manufacturers and companies investing in the technology.

A variety of wireless power transfer systems are known. A typical wireless power transfer system includes a power source electrically connected to a wireless power transmitter, and a wireless power receiver electrically connected to a load.

In magnetic induction systems, the transmitter has a transmitter coil with a certain inductance that transfers electrical energy from the power source to the receiver, which has a receiver coil with a certain inductance. Power transfer occurs due to coupling of magnetic fields between the coils or inductors of the transmitter and receiver. The range of these magnetic induction systems is limited, and the coils or inductors of the transmitter and receiver must be tightly coupled, i.e. have a coupling factor above 0.5 and be in optimal alignment for efficient power transfer.

There also exists resonant magnetic systems in which power is transferred due to coupling of magnetic fields between the coils or inductors of the transmitter and receiver. The transmitter and receiver inductors may be loosely coupled, i.e. have a coupling factor below 0.5. However, in resonant magnetic systems the inductors are resonated using at least one capacitor. Furthermore, in resonant magnetic systems, the transmitter is self-resonant and the receiver is self-resonant. The range of power transfer in resonant magnetic systems is increased over that of magnetic induction systems and alignment issues are rectified. While electromagnetic energy is produced in magnetic induction and resonant magnetic systems, the majority of power transfer occurs via the magnetic field. Little, if any, power is transferred via electric induction or resonant electric induction.

In electrical capacitive systems, the transmitter and receiver have capacitive electrodes. Power transfer occurs due to coupling of electric fields between the capacitive electrodes of the transmitter and receiver. Similar, to resonant magnetic systems, there exist resonant electric systems in which the capacitive electrodes of the transmitter and receiver are made resonant using at least one inductor. The inductor may be a coil. In resonant electric systems, the transmitter is self-resonant, and the receiver is self-resonant. Resonant electric systems have an increased range of power transfer compared to that of electric induction systems and alignment issues are rectified. While electromagnetic energy is produced in electric induction and resonant electric systems, the majority of power transfer occurs via the electric field. Little, if any, power is transferred via magnetic induction or resonant magnetic induction.

While some wireless power transfer systems are known, improvements and/or alternatives are desired.

This background serves only to set a scene to allow a person skilled in the art to better appreciate the following description. Therefore, none of the above discussion should necessarily be taken as an acknowledgement that that discussion is part of the state of the art or is common general knowledge. One or more aspects/embodiments of the disclosure may or may not address one or more of the background issues.

### Summary

According to an aspect of the disclosure there is provided a controller for controlling operation of an inverter of a transmitter of a wireless power transfer system based on detection of a signal.

In a wireless power transfer system a transmitter generates a field for transferring power to a receiver. The field is generated by driving a transmit element of the transmitter with an alternating current (AC) voltage.

The transmitter may therefore include an inverter for converting an input direct current (DC) power signal to AC. The inverter may include a number of switching elements. A large amount of power may be required to control the switching elements. At high power loads, i.e., high receiver loads, this power may be negligible. However, at low power loads the use of a relatively large amount of power to control the switching elements may be inefficient. Thus, the transmitter and wireless power transfer to the receiver may be inefficient. In other words, the transmitter may require a large amount of operating power compared to power transferred to the receiver.

The described controller may improve efficiency of the transmitter and/or power transfer to the receiver.

The controller may be implemented in transmitter control circuitry. The circuitry may comprise analog electronics. Implementing the controller as control circuitry / analog electronics may offer benefits over conventional software solutions. For example, a circuit solution may be less expensive, simpler and smaller to implement than software solutions. Further, a software solution may be difficult to review for compliance with a particular standard. In contrast, a circuit solution may be less complicated and straightforward to review for compliance.

Accordingly, in an aspect of the disclosure there is provided transmitter control circuitry for controlling operation of an inverter of a transmitter of a wireless power transfer system based on detection of signal. The transmitter control circuitry may be for controlling the enabling of the inverter. The inverter may comprise one or more switching elements. The transmitter control circuitry may control selectively enabling/disabling of elements of the inverter, e.g., one or more switching element of the inverter. The transmitter control circuitry may enable power transfer of a transmitter of a wireless power transfer system. The transmitter control circuitry may be for signal detection, e.g., detection of a receiver proximate a transmitter of a wireless power transfer system.

The inverter may be an electrical inverter for converting an input DC signal to an output AC signal.

The circuitry may control operation of a switching element of an inverter.

The circuitry may control a duty cycle of an inverter. Controlling the duty cycle may comprise varying the duty cycle. Thus, the circuitry may vary a duty cycle of an inverter. Varying the duty cycle may comprise increasing and/or decreasing the duty cycle. The circuitry may increase the duty cycle, e.g., 4% to 100%, upon detection of a load signal. The circuitry may decrease the duty cycle, e.g., 100% to 4%, upon no longer detecting a load signal.

A duty cycle may represent a portion or percentage of time of an active signal in an electrical component. For example, the duty cycle may be a value between and including 0 to 100%, where 0% represents the electrical component being always deactivated, and 100% represents the electrical component being always active. The duty cycle of an inverter may represent the percentage or time the inverter is operational in a given period. For example, a duty cycle of 25% may represent the inverter being operational 25% of the time in a given period, and non-operational 75% of the time in the same given period.

Controlling a duty cycle of the inverter may result in the inverter only outputting an AC signal for a portion of time, rather than the entire period of time. This may improve power efficiency of the transmitter and/or wireless power transfer as one or more elements of the inverter are powered for only a portion of time.

For example, if the receiver is not present, the transmitter may not transfer power. However, the transmitter may generate a field for a portion of time in order to detect if a receiver is present. Such a detection field may require only a light or small load. Varying the duty cycle of the inverter such that the inverter outputs an AC power signal required to generate the field for only a portion of time may accordingly improve the efficiency of the transmitter. Efficiency may refer to the thermal performance of the electrical components, wear on the electrical components, e.g., the switching elements, and/or the average power efficiency of the power transfer system.

The circuitry may control a duty cycle of an inverter of a transmitter of a wireless power transfer system based on detection of a load signal. The circuitry may control the duty cycle based on a detected load signal. The load signal may be detected at the transmitter, e.g., the circuitry, and/or a transmit element of the transmitter. The load signal represents electrical power transfer to the receiver. In other words, a load signal may be present when the transmitter is transferring electrical power to a receiver, but may not be present when a receiver is not present and electrical power transfer is not occurring.

The circuitry may control a duty cycle of an inverter based on detection of a load signal modulated at a receiver of the wireless power transfer system. The circuitry may control a duty cycle of an inverter based on detection of a modulated load, where the modulated load corresponds to a receiver for extracting power from a transmitter of a wireless power transfer system.

Further the load signal may comprise a particular load signal where the particular load signal is a controlled output or feedback signal of the receiver. For example, the receiver may control the load signal, e.g., modulate the load signal at a particular frequency, such that detection of the particular load signal controls the duty cycle, but detection of other load signals causes no change in the duty cycle of the inverter. In this way, the circuitry may detect particular receivers. In other words, the circuitry may be used to identify a receiver signature based on the modulation frequency in the load signal. Such detection may require demodulation circuitry. Alternatively, the circuitry may control the duty cycle based on detection on any modulated load signal, i.e., any varying load signal.

The circuitry may be configured to control the duty cycle of the inverter based on detection of the load signal at a pre-set frequency. The frequency may be set by a receiver which modulates the load signal at the frequency.

The circuitry may comprise:
a detector for detecting the load signal. The detector may be for detecting the load signal at an inverter. The detector may detect the load signal at the output of the inverter. The load signal may be detected at the input of the transmitter. For example, the load signal may be detected at an input of a transmit element of the transmitter. The load signal may be modulated by a receiver to which the transmitter is transferring power. The load signal may be detected at the transmitter. The detector may detect the load signal. The detector may detect the load signal at a radiofrequency (RF) section of the transmitter. The detector may detect a modulated load signal. The detector may correspond to a modulation detector. The detector may be for detecting the load signal at an input of the transmitter.

The detector may comprise a plurality of filters. Each filter of the plurality of filters having a different frequency response. The detector may comprise a detection circuit. The detector may comprise analog electronics. One of the filters may have a frequency response above a modulation frequency of the load. Another of the filters may have a frequency response below a modulation frequency of the load.

Implementing the detector as a detection circuit / analog electronics may offer benefits over conventional software solutions. For example, a circuit solution may be less expensive, simpler and have a smaller footprint to implement than a software solutions. Further, a software solution may be difficult to review for compliance with a particular standard. In contrast, a circuit solution may be less complicated and more straightforward to review for compliance.

The filters may comprise low-pass filters. Each filter may have a different cut-off frequency. For example, one filter may have a cut-off frequency above an expected frequency of the modulated signal, while another filter has a cut-off frequency below the expected frequency. The filters may receive the load signal detected at the transmitter and output by the receiver. The filters may filter the load signal. The detector may comprise two filters, e.g. two low-pass filters. At least one filter may filter out the load signal, while another filter does not filter out the load signal. Thus, one filter may output a modulated signal while another does not. Different filters may accordingly have different outputs dependent on the load signal. Two filters may be present.

The circuitry may comprise:
a comparator electrically connected to at least one of the plurality of filters. The comparator may be electrically connected to the filters. The comparator may compare the two filtered signal and output a signal based on the comparison. The comparator may output high if a non-inverting input from one filter is higher than an inverting input from another filter. The comparator may output low if an inverting input from one filter is higher than a non-inverting input from another filter. The output of the comparator may be used to control one or more electrical components. For example, the output of the comparator may control operation of a timer for selectively enabling a gate driver connected to a switching element of the inverter. The comparator may thus vary a duty cycle of the inverter.

Electrically connected does not indicate direct or indirect electrical connection, but rather includes both. In other words two electrical components may be electrically connected while still having electrical components forming part of the electrical connection between the two components. Further, references to connection should be understood to mean electrical connection unless otherwise stated.

A first signal output by the comparator may control a discharge/charge state of a capacitor of a timer to output a control signal (HIGH) to a gate driver to enable operation of the switching element. The first signal may stay below a set point of the timer. While the circuitry is described in respect of a gate driver, an oscillator, flip-flop, DC/DC converter, or direct control of a switching element of the inverter may be. A second signal output by the comparator may control a discharge/charge state of a capacitor of a timer to periodically output a control signal (LOW) to a gate driver to disable operation of a switching element of an inverter of the transmitter. The second signal may be high impedance and allow the timing capacitor to charge above a set point of the timer. The control signal may be high or low and may control a gate driver to enable/disable operation of a switching element of the inverter.

If the output of the comparator is high impedance and allows the timing capacitor to charge to a voltage equal to or above a set point of the timer, the set point changes as the timer output cycles from high to low, and a capacitor of the timer may discharge. When the capacitor discharges to the new set point the output may flip again and the cycle may start anew. The output of the timer may oscillate on and off at a pre-set duty cycle for as long as the modulation signal is not detected.

The timer may output the HIGH and LOW control signals intermittently. The timer may output the HIGH control signal for a portion of time and output no signal or a LOW control signal for another portion time. When no or a LOW control signal is output, the gate driver may disable switching operation of the switching element. When a HIGH control signal is output, the gate driver may enable normal switching operation of the switching element. When the switching element is operating as per normal switching operation, e.g., switching according to an operating frequency of the transmitter to invert a DC power signal to generate an AC signal, the transmitter may generate a field for transferring power via field coupling, e.g., magnetic or electric field coupling. When operation of the switching element is disabled, the transmitter does not generate a field such that no electrical power is transferred via field coupling. The switching element switches at a frequency to perform wireless power transfer. The control signal (driver enable signal) being HIGH allows the switching element to operate, and when the control signal (driver enable signal) is LOW, the switching element remains in the open state, e.g., no power is transferred.

As one of skill in the art will appreciate, the gate driver could function in an opposite arrangement. For example, the control signal (driver enable signal) being LOW may allow the switching element to operate, and the control signal (driver enable signal) being HIGH, the switching element may remain in the open state and no power is transferred.

The circuitry may comprise:
a peak detector, filter, and/or a gain circuit. The gain circuit may be electrically connected to the peak detector. The gain circuit may be electrically connected to the gain circuit via a filter. The filter may comprise a bandpass filter. The peak detector may detect peaks in the load signal, e.g., modulated load signal. The filter may filter the peaks. The gain circuit may amplify the filtered peak signals. The peak detector may detect one or more peaks in the load signal, e.g., modulated load signal. The peak detector may be electrically connected to the detector. The peak detector may output the peak signals of the load signal to the detector.

The circuitry may comprise
a timer for outputting a control signal for controlling operation of the switching element based on detection of the load signal. The timer may be electrically connected to the detector. The timer may comprise a fault timer. The timer may comprise a timer circuit. The timer circuit may comprise one or more capacitors. The timer may output the control signal.

The timer may receive a signal from the detector or modulation detector. The signal may control operation of the timer. The signal may reset the timer. The signal may enable charging of a capacitor. The capacitor charges until it is fully charged. The capacitor may charge until it reaches a set point, i.e., trip point, of the timer. The capacitor then discharges over a period of time when the output of the timer switches due to rising capacitor voltage. The capacitor may discharge based on the hysteresis of the timer set point. The capacitor charges and then discharges to form a relaxation oscillator. The charging and discharging capacitor(s) is used to provide a control signal to a gate driver to selectively enable/disable a switching element of an inverter of the inverter.

The timer may further comprise a comparator. The capacitor may be electrically connected to the comparator, e.g., an input of the comparator or amplifier. The capacitor may be electrically connected to a comparator of the timer which outputs a control signal based on the charging/discharging capacitor. When the detector detects a modulated load, the comparator, e.g., an open collector comparator, of the modulation detector will oscillate high (impedance) and low, and while the capacitor voltage is changing, the capacitor is not allowed to charge significantly enough to trip the timer. The control signal output by the modulation detector is therefore high to control (vary) the duty cycle of the inverter. When the control signal is high, the duty cycle of the inverter is 100%. When the control signal is low, the duty cycle of the inverter is reduced, e.g., 4%.

When the detector detects no load, (or an incorrectly modulated load, i.e., a load not modulated at the expected frequency), the output of the comparator of the detector (modulation detector) is high impedance and the capacitor of the timer cycles between charging and discharging between set points of the timer (fault timer). When the output of the detector is low, the output of the comparator or amplifier of the timer (fault timer) is high, and the timer enables a gate driver to operate a switching element of the inverter according to its normal switching frequency. When the output of the detector is high, i.e., no receiver is detected, the output of the comparator or amplifier of the timer (fault timer) is low once the capacitor of the timer charges past the set point. The output of the timer is low, and the gate driver does not enable operation of the switching element. When not enabled, i.e., disabled, the switching element does not switch according to its normal operating frequency, e.g., the operating frequency of the transmitter.

The circuitry may further comprise:
a gate driver for outputting a gate signal to control operation of the switching element based on the control signal. The gate driver may be electrically connected to the timer. The gate driver may be electrically connected to the switching element. The gate driver may output the gate signal.

The gate driver is controlled by a signal from the timer. The gate driver may be controlled by a control signal output by the timer. The control signal may enable operation of the gate driver to output a gate signal for controlling operation of the switching element. The gate driver may be selectively enabled by a signal from the timer. For example, a control signal may cause the gate driver to output a gate signal according to an operating frequency of the transmitter. The gate signal may drive operation of a switching element of the inverter. The gate signal may drive operation of the switching element to switch according to the operating frequency of the transmitter. A control signal may control the gate driver or disable operation of the gate driver such that the gate driver does not operate according to the operating frequency of the transmitter. The duty cycle with which a gate driver is enabled may be dictated by the timer, e.g., the charging and discharging capacitor. This may reduce the duty cycle of the inverter based on detection of a modulated load signal at the detector (modulation detector). The gate signal output by the gate driver may normally oscillate at an operating or fundamental frequency when the gate driver is enabled by the modulation detector via the comparator or amplifier of the timer. The duty cycle of the enable to the gate driver may be dictated by the timer when no receiver is detected, or the duty cycle may be 100% when a receiver is detected.

The switching element may comprise a transistor. The gate signal may be received at a gate terminal of the transistor. The gate signal may accordingly control operation of the transistor.

The circuitry may comprise a plurality of gate drivers. Each gate driver may be electrically connected to the timer and one of a plurality of switching elements.

The circuitry may further comprise:
an overvoltage protection or detector for detecting a voltage level at the circuitry.

The overvoltage protection or detector may be electrically connected to the gate driver. The overvoltage protection or detector may be configured to control operation of the gate driver based on the voltage level exceeding a threshold. The overvoltage protection or detector may be configured to control operation of other components of the inverter and/or transmitter based on the voltage level exceeding a threshold. If the voltage level exceeds a threshold the overvoltage detector may output a control signal to cause the gate driver to output a gate signal and open the switching element. The overvoltage protection or detector may detect a voltage exceeding a threshold. The voltage may exceed a threshold if a foreign object is detected instead or in addition to a receiver, no transmit element is present, a receiver or receive element is too close to a transmitter or transmit element, or other overload condition. For example, metal proximate to the transmitter may cause a voltage level to exceed a threshold. The overvoltage protection or detector may accordingly output a control signal to control operation of the gate driver to output a low gate signal to open the switching element.

The overvoltage detector may comprise a timer. Upon detection of a voltage exceeding a threshold the timer may be triggered such that the control signal which causes the switching element to open (and therefore the transmitter to transfer no power, i.e., generate no field) for a predetermined period of time. For example, when a voltage exceeding a threshold, the timer may trigger opening of the switching element for 2 seconds, and then return the switching element to normal operation. A fault may be re-triggered during the 2 second window, or immediately after reset and may be able to shutdown for the full 2 second cycle.

The load signal may comprise a modulated load signal. The modulated signal may have a pre-set frequency. The pre-set frequency may be a known frequency which is communicated to the transmitter control circuitry. The load signal may be modulated at a receiver of a wireless power transfer system. The load may be modulated at a pre-set frequency.

The circuitry may be implemented in an analog circuit, a field programmable gate array (FPGA), application-specific integrated circuit (ASIC), microcontroller or other suitable electrical component(s).

The circuitry may further comprise:
a temperature shutdown controller for protecting the circuitry from overheating. The temperature shutdown controller may be implemented in additional circuitry. The controller may be electrically connected to the gate driver. The controller may control the gate driver to output a low signal or no signal in the event that overheating is detected, i.e., a temperature of the transmitter control circuitry exceeds a threshold. The controller may comprise a thermistor for detecting a temperature.

According to another aspect there is provided an inverter. The inverter may be for a transmitter of a wireless power transfer system. The transmitter may be for transferring electrical power wirelessly to a receiver of the wireless power transfer system.

The inverter may comprise the described circuitry. The inverter may further comprise:
a switching element. The switching element may be for producing an AC signal at a particular frequency for a transmit element of a transmitter of a wireless power transfer signal. The switching element may be electrically connected to a transmit element of a transmitter of a wireless power transfer system. The switching element may be connected to an output stage between the switching element of the inverter and a transmit element of the transmitter.

The circuitry may be electrically connected to the switching element for controlling operation of the switching element based on detection of a load signal. The circuitry may control a duty cycle of the inverter based on detection of a load signal. The circuitry may vary a duty cycle based on detection of a load signal.

The load signal may vary at a pre-set frequency. In other words, peaks (amplitudes) of the load may be modulated at a pre-set frequency. The load signal may be from a receiver of the wireless power transfer system. The receiver may be adapted to extract power from the transmitter of the wireless power transfer system.

The circuitry may be configured to control operation of the switching element based on detection of the load signal at a pre-set frequency.

The switching means may comprise:
at least one transistor.

According to another aspect there is provided a transmitter for transferring power to a receiver of a wireless power transfer system. The transmitter may comprise:
an inverter comprising at least one switching element. The inverter may convert a DC power signal to an AC power signal. The transmitter may comprise multiple inverters, each inverter comprising at least one switching element. For example, the transmitter may comprise two inverters, each inverter comprising one switching element.

The transmitter may further comprise:
a transmit element for generating a field for wirelessly transferring electrical power to a receiver of a wireless transfer system. The transmit element may be electrically connected to an output of the inverter. The output of the inverter may output an AC signal.

The transmit element may be connected to an output of the inverter via a conditioning circuit. The conditioning circuit may comprise a filter. The conditioning circuit may comprise an output stage.

The field may be a magnetic and/or electric field. Electrical power may be transferred from the transmitter to a receiver via magnetic or electric field coupling. The transmit element may comprise a coil and/or a capacitive electrode.

The transmitter may further comprise the described transmitter control circuitry. In particular, the transmitter may further comprise:
transmitter control circuitry for controlling a duty cycle of the inverter based on detection of a load signal at the transmitter.

The circuitry may further comprise:
a detector for detecting the load signal at an inverter. The detector may detect the load signal at the output of the inverter. The load signal may be detected at the input of the transmitter. For example, the load signal may be detected at an input of a transmit element of the transmitter. The load signal may be modulated by a receiver to which the transmitter is transferring power. The load signal may be detected at the transmitter. The detector may detect the load signal. The detector may detect the load signal at a radiofrequency (RF) section of the transmitter. The detector may detect a modulated load signal. The detector may correspond to a modulation detector.

The detector may comprise a plurality of filters. Each filter of the plurality of filters having a different frequency response. The detector may comprise a detection circuit. The detector may comprise analog electronics.

The circuitry may further comprise:
a timer for outputting a control signal for controlling operation of the switching element based on detection of the load signal. The timer may be electrically connected to the detector. The timer may comprise a fault timer. The timer may comprise a timer circuit. The timer circuit may comprise one or more capacitors. The timer may output the control signal.

The circuitry may comprise:
a gate driver for outputting a gate signal to control operation of the switching element based on the control signal. The gate driver may be electrically connected to the timer. The gate driver may be electrically connected to the switching element. The gate driver may output the gate signal.

The circuitry may further comprise:
an overvoltage detector for detecting a voltage level at the circuitry, for example at the inverter.

The overvoltage protection or detector may be electrically connected to the gate driver. The overvoltage protection or detector may be configured to control operation of the gate driver based on the voltage level exceeding a threshold. The overvoltage protection or detector may be configured to control operation of other components of the inverter and/or transmitter based on the voltage level exceeding a threshold. If the voltage level exceeds a threshold the overvoltage detector may output a control signal to cause the gate driver to output a gate signal and open the switching element. The overvoltage protection or detector may detect a voltage exceeding a threshold. The voltage may exceed a threshold if a foreign object is detected instead or in addition to a receiver, no transmit element is present, a receiver or receive element is too close to a transmitter or transmit element, or other overload condition. For example, metal proximate to the transmitter may cause a voltage level to exceed a threshold. The overvoltage protection or detector may accordingly output a control signal to control operation of the gate driver to output a low gate signal to open the switching element.

The detector, timer, gate driver and overvoltage detector may include any of the features and/or aspects described in respect of the transmitter control circuitry.

The load signal may comprise a modulated load signal modulated at a receiver of a wireless power transfer system at a pre-set frequency.

The transmit element may be electrically connected to an output of the switching element. The transmit element may be electrically connected to an output of an inverter an output of an output stage which is electrically connected to the inverter.

The transmitter may further comprise:
a power source for outputting a power signal, the power source electrically connected to an input of the inverter.

According to another aspect there is provided a method of controlling operation of a transmitter of a wireless power transfer system. The method may comprise:
controlling operation of an inverter of a transmitter of a wireless power transfer system based on detection of a signal at the transmitter. The method may control operation of a switching element of the inverter. The signal may comprise a load signal detected at the transmitter.

The method may comprise:
controlling a duty cycle of an inverter of a transmitter of a wireless power transfer system based on detection of a load signal at the transmitter. Controlling the duty cycle may comprise varying the duty cycle based on detection of a load signal at the transmitter. Varying the duty cycle may reduce average power consumption at the transmitter and/or improve average efficiency of power transfer from the transmitter to the receiver. Rather than operating at a duty cycle of 100%, the duty cycle may be controlled, i.e., varied, decreased and then increased to levels less than 100% thereby reducing power consumption at the transmitter.

Controlling the duty cycle may comprise:
controlling the duty cycle of the inverter based on detection of a load signal having a pre-set frequency at the transmitter.

The method may further comprise:
detecting the load signal at an output of an inverter of a transmitter of a wireless power transfer system. The load signal may be detected at a transmit element of the transmitter. The detecting may be performed by a detector. The detector may be as described.

Detecting may comprise:
detecting one or more peaks in the load signal. Detecting may further comprise filtering the detected peaks.

Detecting may comprise:
filtering the load signal at a plurality of filters. Each filter may have a unique frequency response. Filtering may comprise filtering the detected peaks in the load signal. The filtering may determine if the load signal is present as one filter may attenuate the signal at the load modulation frequency, while another does not. Filtering may comprise filtering a load signal with one or more low-pass filters. The load signal may comprise an amplified and filtered load signal. Detecting may further comprise comparing outputs of filters and controlling the gate driver of a switching element based on the outputs. The gate driver may be controlled via the timer. For example, if both outputs of the filters do not contain the modulated load signal, the inverter is operated at reduced duty cycle, whereas if the outputs show the presence of the modulated signal, e.g., by one of the outputs exhibiting a matching modulation frequency, the inverter may be enabled and the switching element may be operated at the operating frequency, e.g., the working frequency of the transmitter. The comparison may be performed by an operational amplifier or comparator. The filters may comprise two filters. The filters may comprise more than two filters.

The method may further comprise:
controlling the duty cycle based on a timer.

The method may further comprise:
resetting the timer based on detection of the load signal. The timer may be reset upon the comparison of filter outputs. The output of the comparison may charge a capacitor which then discharges for a known time thereby providing a timer signal. The capacitors may charge and discharge at different, known, and settable rates, to create an oscillation in the timer output with a predetermined cycle (on / off times). The timer signal may control operation of the switching element thereby controlling the duty cycle of the inverter.

Controlling the duty cycle may comprise:
controlling operation of a gate driver electrically connected to a switching element of the inverter.

Controlling operation of the gate driver may comprise:
controlling operation of the gate driver based on a control signal output by the timer. Operation of the gate driver may be controlled by a control signal output by the timer. Upon detection of a modulated load signal, a filter in the detector may attenuate the load signal, while another filter does not as the load signal has a known frequency falling within a cut-off frequency of one of the filters, but not another. The outputs of the filters may be fed into an operational amplifier or comparator which outputs a signal dependent on whether an inverting or non-inverting input is higher. When a load signal is detected, the output of the operational amplifier or comparator (of the detector/modulator detector) cycles high and low. The signal prevents a capacitor of the timer from charging, such that a gate driver is controlled, e.g., enabled, to operate according to the working frequency, e.g., operating frequency, of the transmitter. Once the load signal is not detected, the capacitor is charged, and the timer is tripped such that the control signal output from the timer controls operation of the gate driver causing a change in the duty cycle of the inverter as the capacitor charges and discharges between the set points of the fault timer. In this manner, the duty cycle of the inverter can be varied based upon detection of the modulated load signal.

The transmitter control circuitry, inverter, transmitter and method may have any of the benefits and/or advantages associated with any other described feature or element.

According to another aspect there is provided receiver control circuitry for controlling operation of a receiver of a wireless power transfer system. The circuitry may modify operation of a receiver of a wireless power transfer system. The circuitry may modify operation to vary a load signal at the receiver.

According to another aspect there is provided receiver control circuitry for modulating a load at a receiver of a wireless power transfer system. The circuitry may be for modulating a load of a receiver of a wireless power transfer system.

The circuitry may be configured to draw current at an input of a rectifier of the receiver to modulate the load signal.

As described the load signal may be detected by transmitter control circuitry to control a duty cycle of an inverter of a transmitter of a wireless power transfer system.

The circuitry may vary a load signal at the receiver.

The circuitry may be configured to draw current at an input or output of a rectifier to vary the load signal. By drawing current from the input or output of the rectifier the circuitry may alter the load signal of the receiver. The current may be drawn in a periodic manner to generate a modulated load signal.

The circuitry may comprise:
an electrical component electrically connected to an input or an output of the rectifier of the receiver.

The electrical component may comprise:
a capacitor electrically connected to an input of the rectifier. The capacitor may be electrically connected at an input of a diode rectifier.

The circuitry may further comprise:
a switching element electrically connected to the capacitor. The switching element may be for selectively loading the capacitor according to a pre-set frequency to vary a load signal at the receiver. The switching element may vary the load signal thereby modulating the load signal at the pre-set frequency.

The pre-set frequency may be communicated to a transmitter of a wireless power transfer system, e.g., by Wi-Fi, Bluetooth, etc. The transmitter may thus respond only when a load signal modulation is detected at the pre-set frequency. For example, the transmitter may include the described transmitter control circuitry to vary a duty cycle of an inverter based on detection of the load signal modulated at the pre-set frequency.

The electrical component may comprise:
a resistor electrically connected to an output of the rectifier. The resistor may be electrically connected to an output of a diode rectifier.

As stated, the electrical component may alternatively comprise a capacitor connected to the input of the rectifier. In comparison with a resistor electrically connected to the output, a capacitor may allow for faster switching, e.g., higher frequencies of modulation, and/or draw less power than the resistor.

The circuitry may further comprise:
a switching element electrically connected to the resistor. The switching element may be for controlling loading at the resistor according to a pre-set frequency to vary a load signal at the receiver.

The circuitry may further comprise:
a modulator for generating a load modulation signal according to a pre-set frequency. The modulator may be electrically connected to the switching element electrically connected to the electrical component. The modulator may output a load modulation signal to control operation of the switching element. The modulator may control a switching frequency of the switching element. The modulator may comprise a relaxation oscillator to control operation of the switching element. The relaxation oscillator may control the switching frequency of the switching element.

The circuitry may further comprise:
a temperature shutdown controller for protecting the circuitry from overheating. The temperature shutdown controller may be implemented in additional circuitry. The controller may prevent electrical power extracted by the receiver from a field generated by a transmitter of a wireless power transfer system from reaching a load. The controller may control a DC/DC converter to prevent the converter from outputting a received power signal to a load at the receiver. The controller may prevent power to the load based on a temperature at the receiver, e.g., the described receiver control circuitry, exceeding a temperature. The controller may comprise a thermistor for detecting a temperature. The controller may control operation of the modulator. The controller may control operation of the relaxation oscillator. The controller may disable the relaxation oscillator. Disabling the relaxation oscillator may reduce the duty cycle of an inverter of a transmitter transferring power to the receiver until the temperature is reduced at the receiver as described.

The described transmitter control circuitry may control, e.g., vary, the duty cycle of the inverter based on detection of the load signal from the receiver, i.e., the load signal varied by the receiver control circuitry.

According to another aspect a receiver of a wireless power transfer system is provided. The receiver may be for receiving electrical power wirelessly. In particular, the receiver may extract or receive electrical power from a field generated by a transmitter of a wireless power transfer system.

The receiver may include any of the benefits described in respect of the receiver control circuitry.

The receiver may comprise:
a rectifier for rectifying a power signal extracted from a transmitter of a wireless power transfer system.

The receiver may further comprise the described receiver control circuitry.

The receiver may further comprise:
receiver control circuitry electrically connected to the rectifier for controlling operation of a receiver of a wireless power transfer system. The circuitry may be for modifying operation of the rectifier to vary a load at the receiver. The circuitry may modify operation of the rectifier to vary a load at the receiver.

The circuitry may be configured to draw current from the rectifier to vary the load. The circuitry may be configured to load the rectifier to vary the load. The circuitry may draw current from the rectifier or load the rectifier according to a periodic frequency to generate a modulated load at the receiver.

The circuitry may comprise:
an electrical component electrically connected to an input or an output of the rectifier of the receiver.

The electrical component may comprise:
a capacitor electrically connected to an input of the rectifier.

The receiver may further comprise:
a switching element electrically connected to the capacitor. The switching element may be for selectively loading the capacitor according to a pre-set frequency to vary a load at the receiver.

The electrical component may comprise:
a resistor electrically connected to an output of the rectifier. As stated, the electrical component may alternatively comprise a capacitor connected to the input of the rectifier. In comparison with a resistor electrically connected to the output, a capacitor may allow for faster switching, e.g., higher frequencies of modulation, and/or draw less power than the resistor.

The receiver may further comprise:
a switching element electrically connected to the resistor. The switching element may be for controlling loading at the resistor according to a pre-set frequency to vary a load at the receiver.

The receiver may further comprise:
a receive element for extracting electrical power from a field generated by a transmitter of a wireless transfer system. The receive element may be electrically connected to an input of the rectifier. The receive element may be connected to an input of the rectifier via a conditioning circuit. The conditioning circuit may comprise a filter. The conditioning circuit may comprise an input stage.

The receiver may further comprise a load electrically connected at an output of the rectifier.

According to another aspect a method of controlling operation of a receiver of a wireless power transfer system is provided. The method may include any of the previously described benefits in respect of the receiver control circuitry or the receiver.

The method may comprise:
modifying operation of a rectifier of a receiver of a wireless power transfer system to vary a load at the receiver.

The method may comprise:
modulating a load at a receiver of a wireless power transfer system. Modulating a load may comprise drawing current.

Modifying operation may comprise:
drawing current from the input or output of the rectifier to vary the load and/or loading the rectifier. Drawing current may comprise drawing current from the input or output of the rectifier.

Drawing current may comprise:
controlling operation of a switching element electrically connected to an electrical component at an input or an output of the rectifier.

The electrical component may comprise a capacitor electrically connected to an input of the rectifier.

The electrical component may comprise a resistor electrically connected to an output of the rectifier. In comparison with a resistor electrically connected to the output, a capacitor may allow for faster switching, e.g., higher frequencies of modulation, and/or draw less power than the resistor.

Controlling operation and/or modulating may comprise:
controlling operation of the switching element according to a pre-set frequency to vary a load at the receiver.

According to another aspect a wireless power transfer system is provided. The system may include any of the previously described features or benefits.

The system may comprise:
a transmitter for transferring power to a receiver of the wireless power transfer system

The transmitter may comprise:
an inverter comprising at least one switching element;

The transmitter may further comprise:
a transmit element for generating a field for wirelessly transferring electrical power to a receiver of a wireless transfer system. The transmit element may be electrically connected to the inverter. The transmit element may be electrically connected to an output of the inverter.

The transmitter may further comprise:
transmitter control circuitry for controlling a duty cycle of an inverter of a transmitter based on detection of a load at the transmitter.

The system may further comprise:
a receiver of a wireless power transfer system for receiving electrical power from the transmitter.

The receiver may comprise:
a rectifier for rectifying a power signal extracted from a transmitter of a wireless power transfer system.

The receiver may comprise:
a receive element for extracting electrical power from the generated field. The receive element may be electrically connected to an input of the rectifier.

The receiver may comprise:
receiver control circuitry electrically connected to the rectifier for controlling operation of a receiver of a wireless power transfer system. The circuitry may be for modifying operation of the rectifier to vary the load.

The receiver control circuitry may be configured to vary the load according to a pre-set frequency.

According to another aspect there is provided a computer-readable medium comprising instructions that, when executed by a processor, perform any of the described methods.

The computer-readable medium may be non-transitory. The computer-readable medium may comprise storage media excluding propagating signals. The computer-readable medium may comprise any suitable memory or storage device such as random-access memory (RAM), static RAM (SRAM), dynamic RAM (DRAM), nonvolatile RAM (NVRAM), read-only memory (ROM), or Flash memory.

The processor may have a single-core processor or multiple core processors composed of a variety of materials, such as silicon, polysilicon, high-K dielectric, copper, and so on.

According to another aspect there is provided a computer program comprising instructions that, when executed by a processor, perform any of the described methods.

The invention includes one or more corresponding aspects, embodiments or features in isolation or in various combinations whether or not specifically stated (including claimed) in that combination or in isolation. As will be appreciated, features associated with particular recited embodiments relating to systems may be equally appropriate as features of embodiments relating specifically to methods of operation or use, and vice versa.

The above summary is intended to be merely exemplary and non-limiting.

### Brief Description of the Drawings

These and other aspects of the present disclosure will now be described, by way of example only, with reference to the accompanying Figures, in which:
Figure 1 is a block diagram of a wireless power transfer system;
Figure 2 is another block diagram of a wireless power transfer system;
Figure 3 is a block diagram of circuitry of a transmitter and receiver of a wireless power transfer system;
Figure 4 is a schematic diagram of an inverter and output stage of a transmitter;
Figure 5 is another schematic diagram of an inverter and output stage of a transmitter;
Figure 6 is a block diagram of transmitter control circuitry of a transmitter of a wireless power transfer system in accordance with an aspect of the disclosure;
Figure 7 is a schematic diagram of the transmitter control circuitry of Figure 6;
Figure 8 is a block diagram of receiver control circuitry of a receiver of a wireless power transfer system in accordance with an aspect of the disclosure;
Figure 9 is a schematic diagram of an input stage and a rectifier of a receiver;
Figure 10 is a schematic diagram of the transmitter control circuitry of Figure 8;
Figure 11 is a flowchart of a method of controlling a transmitter in accordance with an aspect of the disclosure; and
Figure 12 is a flowchart of a method of controlling a receiver in accordance with an aspect of the disclosure.

### Detailed Description of the Drawings

The foregoing summary, as well as the following detailed description of certain embodiments will be better understood when read in conjunction with the accompanying drawings. As will be appreciated, like reference characters are used to refer to like elements throughout the description and drawings. As used herein, an element or feature recited in the singular and preceded by the word "a" or "an" should be understood as not necessarily excluding a plural of the elements or features. Further, references to "one example" or "one embodiment" are not intended to be interpreted as excluding the existence of additional examples or embodiments that also incorporate the recited elements or features of that one example or one embodiment. Moreover, unless explicitly stated to the contrary, examples or embodiments "comprising", "having" or "including" an element or feature or a plurality of elements or features having a particular property might further include additional elements or features not having that particular property. Also, it will be appreciated that the terms "comprises", "has" and "includes" mean "including but not limited to" and the terms "comprising", "having" and "including" have equivalent meanings.

As used herein, the term "and/or" can include any and all combinations of one or more of the associated listed elements or features.

It will be understood that when an element or feature is referred to as being "on", "attached" to, "connected" to, "coupled" with, "contacting", etc. another element or feature, that element or feature can be directly on, attached to, connected to, coupled with or contacting the other element or feature or intervening elements may also be present. In contrast, when an element or feature is referred to as being, for example, "directly on", "directly attached" to, "directly connected" to, "directly coupled" with or "directly contacting" another element of feature, there are no intervening elements or features present.

It will be understood that spatially relative terms, such as "under", "below", "lower", "over", "above", "upper", "front", "back" and the like, may be used herein for ease of describing the relationship of an element or feature to another element or feature as depicted in the figures. The spatially relative terms can, however, encompass different orientations in use or operation in addition to the orientation depicted in the figures.

Reference herein to "example" means that one or more feature, structure, element, component, characteristic and/or operational step described in connection with the example is included in at least one embodiment and or implementation of the subject matter according to the present disclosure. Thus, the phrases "an example," "another example," and similar language throughout the present disclosure may, but do not necessarily, refer to the same example. Further, the subject matter characterizing any one example may, but does not necessarily, include the subject matter characterizing any other example.

Reference herein to "configured" denotes an actual state of configuration that fundamentally ties the element or feature to the physical characteristics of the element or feature preceding the phrase "configured to".

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the terms "approximately" and "about" represent an amount close to the stated amount that still performs the desired function or achieves the desired result. For example, the terms "approximately" and "about" may refer to an amount that is within less than 10% of, within less than 5% of, within less than 1% of, within less than 0.1% of, or within less than 0.01 % of the stated amount.

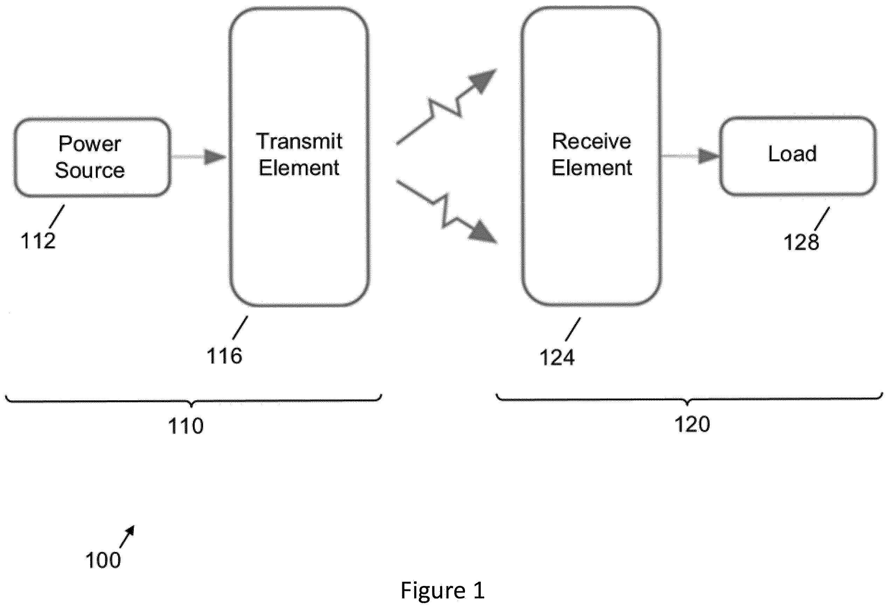

Turning now to Figure 1, a wireless power transfer system generally identified by reference numeral 100 is shown. The wireless power transfer system 100 comprises a transmitter 110 comprising a power source 112 electrically connected to a transmit element 116, and a receiver 120 comprising a receive element 124 electrically connected to a load 128. Power is transferred from the power source 112 to the transmit element 116. The power is then transferred from the transmit element 116 to the receive element 124 via resonant or non-resonant electric or magnetic field coupling. The power is then transferred from the receive element 124 to the load 128. Exemplary wireless power transfer systems 100 include a high frequency inductive wireless power transfer system as described in applicant's US Provisional Application No 62/899165, or a resonant capacitively coupled wireless power transfer system as described in applicant's US Patent No 9653948B2, the relevant portions of which are incorporated herein.

In the wireless power transfer system 100, power is transferred from the transmit element 116 to the receive element 124. It may be desirable to be able to transfer power to and from each respective element, i.e., from receive element 124 to transmit 116.

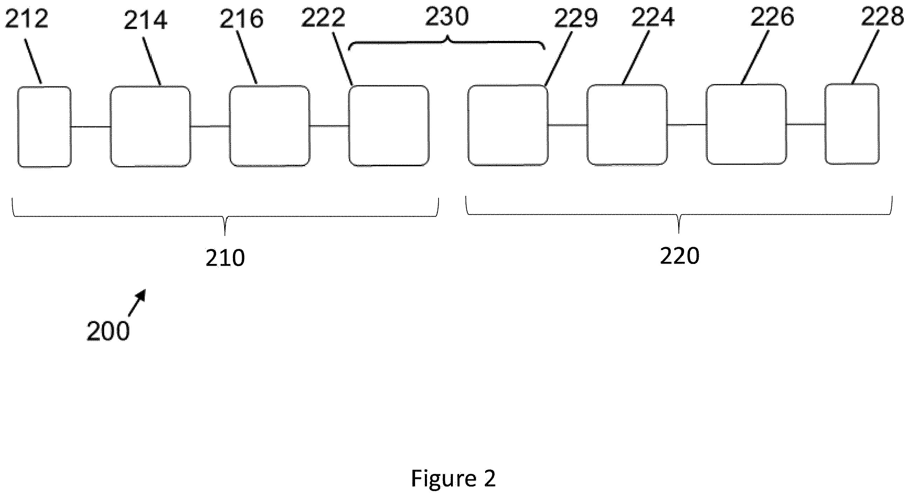

Turning now to Figure 2, another embodiment of a wireless power transfer system is shown generally identified as reference numeral 200. The wireless power transfer system 200 comprises a power supply 212, DC/DC converter 214, circuitry 216, and transmit element 222. The power supply 212 is electrically connected to the DC/DC converter 214. The DC/DC converter 214 is electrically connected to circuitry 216. The circuitry 216 is electrically connected to the transmit element 222.

The power supply 212 is for generating an input power signal for transmission of power. In this embodiment, the input power signal is a direct current (DC) power signal.

The DC/DC converter 214 is for converting a received DC voltage signal to a desired voltage level. The received DC voltage may be from the power supply 212. The system 200 is illustrated as comprising the DC/DC converter 214, one of skill in the art will appreciate other configurations are possible. In another embodiment, no DC/DC converter is present.

In the illustrated arrangement, the circuitry 216 comprises an inverter and an output stage. The output stage matches the output impedance of the circuitry 216 to the optimum impedance of a wireless link 230 between the transmitter and receiver. The output stage may also set the desired impedance presented to the inverter. The output stage also filters high frequency harmonic components of the inverter. The circuitry 216 further comprises a transmitter control circuit or circuitry as will be described. One of skill in the art will appreciate only the inverter and the transmitter control circuit or circuitry may be present.

The transmit element 222 comprises one or more capacitive electrodes and inductive elements, i.e., inductors. The capacitive electrodes may be laterally spaced, elongated electrodes; however, one of skill in the art will appreciate that other configurations are possible including, but not limited to, concentric, coplanar, circular, elliptical, disc, etc., electrodes. Other suitable electrode configurations are described in applicant's US Patent No 9979206B2, the relevant portions of which are incorporated herein by reference. The inductive elements may comprise one or more coils. The coils may include booster or shield coils such as described in applicant's US Patent Application No 17/193539, the relevant portions of which are incorporated herein by reference. The transmit element 222 may further include resonator elements for resonating the capacitive electrodes and inductive elements, i.e., capacitors and inductors.

The power source 212 supplies a DC input power signal to the DC/DC converter 214 which converts the signal to a desired voltage level. The inverter of the circuitry 216 receives the converted DC power signal and converts the DC power signal to AC to allow the ability to generate a magnetic and/or electric field at the transceiver element 222 to transfer power via electric or magnetic field coupling. Specifically, the transmit element 222 generates a magnetic/electric field to transfer power to the receiver via magnetic/electric field coupling. The power source 212, DC/DC converter 214, circuitry 216 and transmit element 222 may collectively form a transmitter 210. As previously stated, the DC/DC converter 214 may not be present in the transmitter 210.

The wireless power transfer system 200 further comprises load 228, DC/DC converter 226, circuitry 224, and receive element 229. The load 228 is electrically connected to the DC/DC converter 226. The DC/DC converter 226 is electrically connected to circuitry 224. The circuitry 224 is electrically connected to the receive element 229.

In the illustrated arrangement, the load 228 is a DC load. The load 228 may be static or variable.

The DC/DC converter 226 is for converting a received DC voltage signal to a desired voltage level. The received DC voltage may be from the circuitry 224. While the system 200 comprises the DC/DC converter 226, one of skill in the art will appreciate other configurations are possible. In another embodiment, no DC/DC converter 226 is present.

The circuitry 224 comprises an input stage and a rectifier. The input stage is configured to ensure optimum impedance presented to the receive element 229 at the full power state of the wireless power transfer system 200. The input stage may also preserve the quasi-voltage source behaviour of the receive element 229 so the output of the rectifier exhibits a stable DC voltage from no load to full load conditions. The circuitry 224 further comprises a receiver control circuit or circuitry as will be described. One of skill in the art will appreciate only the rectifier and the receiver control circuit or circuitry may be present.

The receive element 229 comprises one or more capacitive electrodes and inductive elements, i.e., inductors. The capacitive electrodes may be laterally spaced, elongate electrodes; however, one of skill in the art will appreciate that other configurations are possible including, but not limited to, concentric, coplanar, circular, elliptical, disc, etc., electrodes. Other suitable electrode configurations are described in applicant's US Patent No 9979206B2, the relevant portions of which are incorporated herein by reference. The inductive elements may comprise one or more coils. The coils may include booster or shield coils such as described in applicant's US Patent Application No 17/193539, the relevant portions of which are incorporated herein by reference.

The transmit and receive elements 222, 229 of the system 200 form the wireless link 230. The elements 222, 229 are separated by a wireless gap. The wireless gap may be formed by atmosphere, i.e., air, or by a physical medium, e.g., walls, glass, liquids, wood, insulations, etc. Power is transferred from one element to the other across the wireless link 230 via resonant or non-resonant magnetic and/or electric field coupling, i.e., electric or magnetic induction.

During operation, the receive element 229 extracts power from a magnetic and/or electric field generated by the transmit element 222. The circuitry 224 rectifies the received power signal. The DC/DC converter 226 converts the rectified power signal to the desired power level which is received by the load 228. In this way, the receive element 229 extracts power transmitted by the transmit element 222 (transmitter 210) such that electrical power is transferred to the load 228 via magnetic/electric field coupling. The load 228, DC/DC converter 226, circuitry 224 and receive element 229 may collectively form a receiver 220. As previously stated, the DC/DC converter 226 may not be present in the receiver 220.

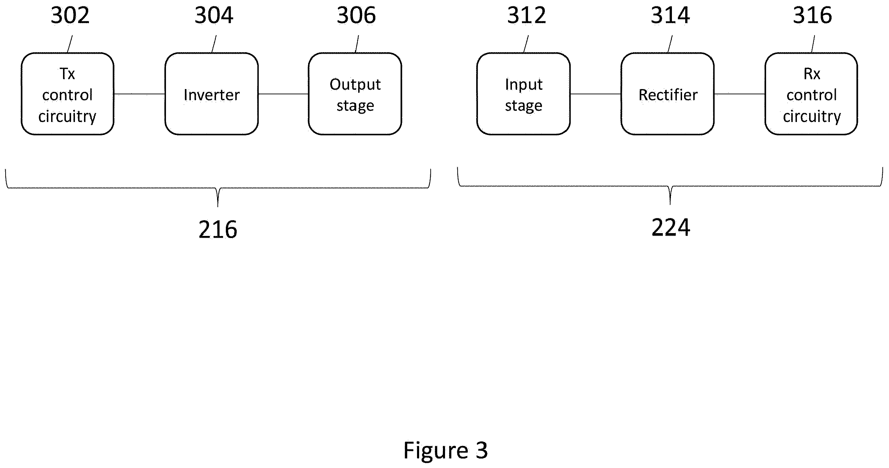

Turning now to Figure 3, a block diagram of the circuitry 216 of the transmitter 210 and the circuitry 224 of the receiver 220 are illustrated. As shown, the circuitry 216 comprises transmitter control circuit or circuitry 302, inverter 304 and output stage 306. The transmitter control circuitry 302 controls a duty cycle of the inverter 304 based on detection of a load signal at the transmitter 210 as will be described. The transmitter control circuitry 302 varies a duty cycle of the inverter 304 based on detection, or nondetection of a modulated load signal. Detection of a modulated load signal may indicate the presence of a receiver. The transmitter control circuitry 302 may control the duty cycle of the inverter 304 to operate infrequently, e.g., 4%, until detection of the modulated load signal. Once the modulated load signal is detected, the transmitter control circuitry 302 may increase the duty cycle to 100% such that full power transfer from the transmitter 210 to the receiver 220 may occur. At 100%, a switching element may operate according to an operating frequency of the system, e.g., 6.78 MHz, 13.56 MHz, or 27.12 MHz. In this way the transmitter control circuitry 302 may reduce power usage at the transmitter 210 and improve average power transfer efficiency.

Further, when compared with software solutions for receiver detection, the analog electronics solution of the transmitter control circuitry 302 may be reviewed for compliance with the required standard in a more straightforward manner. Software may be difficult to review for compliance, whereas as the circuit 302 may be easier, faster and cheaper to review for compliance. This may reduce production time for the entire transmitter 210 and associated systems.

The inverter 304 and output stage 306 have been previously described. The transmitter control circuitry 302 is electrically connected to the inverter 304 which is electrically connected to the output stage 306.

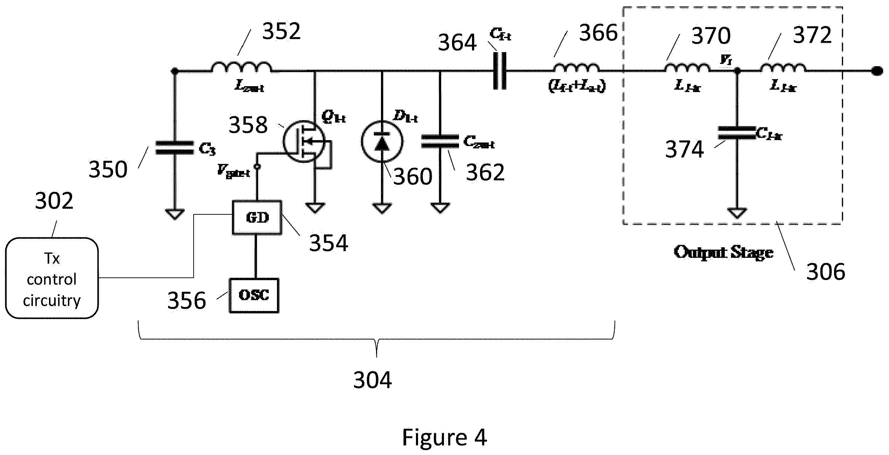

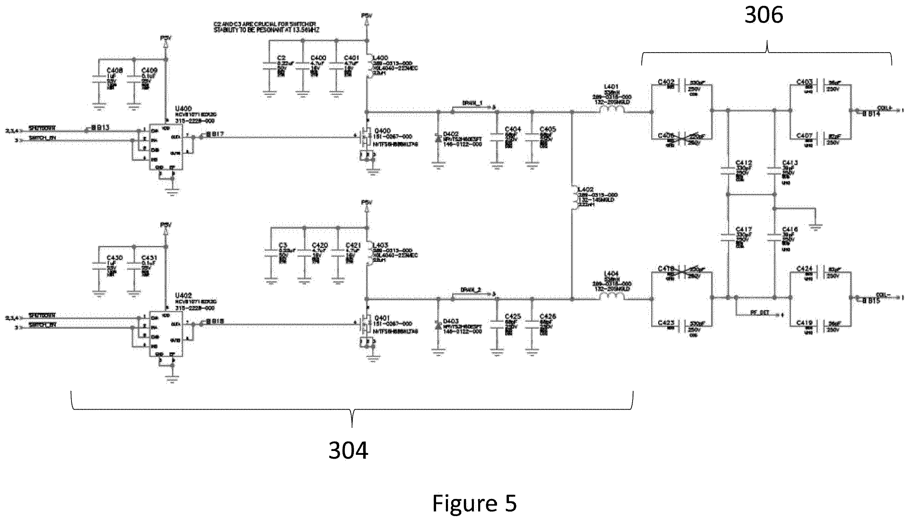

Turning now to Figures 4 and 5, two embodiments of the inverter 304 and output stage 306 are illustrated in more detail. Turning to Figure 4, the inverter 304

The inverter 304 is adapted to convert the converted DC power signal from the DC/DC converter 304 to an alternating current (AC) signal. The inverter 304 may comprise a high frequency power inverter. The output stage 306 is adapted to match the output impedance of the inverter 304 to the optimum impedance of the wireless power link between the transmit element 222 and a corresponding receive element, e.g., receive element 229. The output stage 306 is additionally or alternatively adapted to filter high frequency harmonic components of the inverter 304. The output stage 306 is additionally or alternatively adapted to establish a quasi-current source behaviour at the connection point of the wireless link 230. As previously, one of skill in the art will appreciate, the transmitter 210 may not have any output stage 306.

In the arrangement illustrated in Figure 4, the inverter 304 comprises capacitor 350, inductor 352, gate driver 354, clock generator 356 (oscillator), switching element 358, diode 360, capacitor 362, capacitor 364, and inductor 366. The positive side of capacitor 350 having capacitance C3 is electrically connected to the DC/DC converter 336, and to the inductor 352 having inductance *LZVS-t.* The capacitor 362 is connected in parallel to the main switch 358 indicated as Q1-t. In the illustrated arrangement, the switching element 358 comprises an n-type MOSFET. While an n-type MOSFET has been illustrated, one of skill in the art will appreciate other FETs and switching devices may be used.

The switching element 358 is electrically connected to the gate driver 354 which is electrically connected to the clock generator 356. The gate driver 354 drives the switching element 358 of the inverter 304. The clock generator 356 is electrically connected to the gate driver 354. The clock generator 356 comprises an oscillator. One of skill in the art will appreciate the clock generator 356 may comprise any signal generator.

The transmitter control circuitry 302 is electrically connected to the switching element 358 to control the gate drive 354 to selectively drive the switching element 358. In this manner, the transmitter control circuitry 302 may selectively enable operation of the switching element 358 to vary a duty cycle of the inverter 304.

The clock generator 356 is configured to generate a clock signal to control the gate driver 354 connected to the main switch 358 to invert the inputted power signal from the power source 332 (via the DC/DC converter 334) to an RF or AC signal. The clock generator 356 generates a signal to the gate driver 354 at the operating frequency of the transmitter 210. The operating frequency may comprise 6.78 MHz, 13.56 MHz, or 27.12 MHz. An enable to the gate driver 354 allows the gate driver 354 to propagate the signal from the clock generator 356 through to the main switch 358. If the enable signal to the gate driver 354 is HIGH, the main switch 358 operates at the operating frequency. If the enable signal to the gate driver 354 is LOW, the gate driver 354 is disabled and the gate signal to the main switch 358 goes low.

The inverter 304 further comprises a diode 360 indicated as *D1-t* electrically connected in parallel to the main switch 358, and the capacitor 362 having a capacitance *CZVS-t* electrically connected in parallel to the diode 360. The capacitor 362 is electrically connected to the capacitor 364 having a capacitance Cf-t which is electrically connected in series to the inductor 366 having the inductance *Lf t+La-t.* The main switch 358, diode 360 and capacitor 362 are connected in parallel between inductor 352 and capacitor 364. One of skill in the art will appreciate, the diode 360 may not be present in the inverter 304.

In the illustrated arrangement, the output stage 306 comprises inductor 370 having inductance *L1-tx* electrically connected in series to inductor 372 having inductance *L1-tx* with capacitor 374 having capacitance *C1-tx* electrically connected between the inductors 370, 372.

Turning now to Figure 5 another arrangement of the inverter 304 and output stage 306 is illustrated. The inverter 304 comprises two gate drivers U400, U402 electrically connected to switching elements Q400, Q401, respectively. In the illustrated arrangement the switching elements Q400, Q401 take the form of field effect transistors (FETs). The switching elements Q400, Q401 control the input into transmit elements 222 of the transmitter 210.

The gate drivers U400, U402 are controlled by a control signal (-SHUTDOWN) generated by the transmitter control circuitry 302 as will be described. The gate drivers U400, U402 are powered by a power source (e.g., P5V or a DC/DC converter of the transmitter 210) which is electrically connected to the gate drivers U400, U402. Also connected to the gate drivers U400, U402 in parallel to the power source are capacitors C408, C409 in respect of gate driver U400 and capacitors C430, C431 in respect of gate driver U401. The gate drivers U400, U402 are electrically connected to the gate terminals of the switching elements Q400, Q401. In another arrangement, the gate drivers U400, U402 are electrically connected to the switching elements Q400, Q401 via one or more gate resistors and/or a matching network.

The switching elements Q400, Q401 are electrically connected to a power source (e.g., P5V) via inductors L400, L403, which is electrically connected to an inductor and capacitors. In particular, switching element Q400 is electrically connected at a drain terminal thereof to inductor L400 to which capacitors C2, C400, and C401 are electrically connected with the power source being a common node for the capacitors and inductor L400. Switching element Q401 is electrically connected at a drain terminal thereof to inductor L403 to which capacitors C3, C420, and C421 are electrically connected with the power source being a common node for the capacitors and inductor L400.

Additionally, diode D402, and capacitors C404 and C405 are electrically connected in parallel to the drain/source terminals of switching element Q400. Diode D403, and capacitors C425 and C426 are electrically connected in parallel to the drain/source terminals of switching element Q401. Inductor L402 is connected between the drain terminals of the switching elements Q400, Q401. Inductor L401 and inductor L404 are electrically connected in series between the drain terminals of the switching elements Q400, Q401, and capacitors C402, C423, respectively. One of skill in the art will appreciate, inductor L402 may not be present.

The gate drivers U400, U402 are controlled by the control signal (-SHUTDOWN) to drive the switching elements Q400, Q401 via gate signals to the respective gate terminals of the switching elements Q400, Q401. Thus, when the gate drivers U400, U402 are operated to output a gate signal, the switching elements Q400, Q401 are switching at the working frequency and output a signal to the transmit element 222 to generate an electric or magnetic field for field coupling. In the illustrated arrangement, the transmit element 222 comprises a coil with two terminals (COIL+ and COIL-) and generates a magnetic field. While the described arrangement has a coil, more coils may be present. When the gate drivers U400, U402 are controlled to output no signal, the switching elements Q400, Q401 are opened, and no field is generated by the transmit element 222.

The input stage 306 is electrically connected to the inverter 304 and to the transmit element 222. The input stage 306 comprises capacitors C402, C406 connected in parallel together and electrically connected to the inductor L401 which is electrically connected to the switching element Q400 of the inverter 304. The input stage 306 further comprises capacitors C418, C423 connected in parallel together and electrically connected to the inductor L404 which is electrically connected to the switching element Q401 of the inverter 304. Capacitors C414, C417 are connected in series between capacitors C402, C406 and C418, C423, as our capacitors C413, C416. Capacitors C414, C413 are connected in parallel as are capacitors C417, C416. Capacitors C403, C407 are connected in parallel and electrically connected to capacitors C402, C406 and C413, C412. Capacitors C424, C419 are connected in parallel and electrically connected to capacitors C418, C423 and capacitors C416, C417. Capacitors C403, C407 are electrically connected to one coil of the transmit element 222 while capacitors C424, C419 are connected to another coil of the transmit element 222.

Figure 5 includes various particular values of the components identified. For example, capacitor C430 is identified as having a capacitance of 1 uF. This, and other values, are presented for illustrative purposes only, and are not to be taken as limiting.

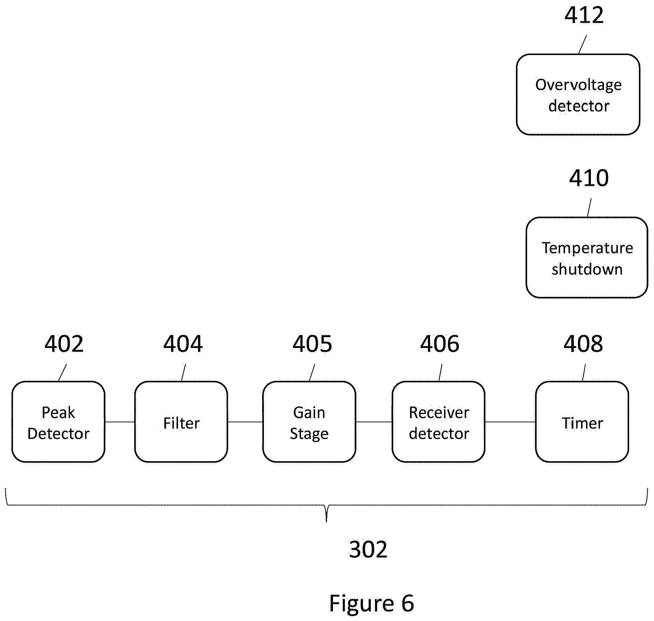

As stated, the gate drivers U400, U401 are controlled by a control signal (-SHUTDOWN) generated by the transmit control circuitry 302. Turning now to Figure 6, elements of the transmitter control circuitry 302 are illustrated. Generally, the transmitter control circuitry 302 varies the duty cycle of the inverter 304 based on detection of a load signal, i.e., a load signal at the transmit element 222 of the transmitter 210. The switching element may be the switching element 358 illustrated in Figure 4, or the switching elements Q400, Q401 illustrated in Figure 5.

The transmitter control circuitry 302 control the gate driver, e.g., gate driver 354 or U400, U401, to enable a switching element of the inverter at a duty cycle of 4% of a time period when no receiver is detected. When a receiver is detected, the transmitter control circuitry 302 varies the duty cycle of the inverter 304, e.g., increases the duty cycle, to 100% such that the gate driver is always enabling the switching element. The switching element operates at its operating frequency contingent on the detected modulated load signal such that the transmit element 222 generates a field and power is transferred to the receiver, e.g., receiver 220, at full capacity.

Transmitter control circuit 302 comprises a peak detector 402 for detecting peaks in the load signal. The transmitter control circuitry 302 further comprises a filter 404, e.g., a bandpass filter, for filtering the detected peaks in the modulated load signal. The filter 404 isolates a portion of the load signal that is composed of a modulated peak signal, while also eliminating unwanted high frequency (HF) noise and DC bias.

The transmitter control circuit 302 may further comprise a receiver detector or modulation detector 406 for detecting a receiver based on the load signal. In other words, the modulation detector 406 detects if a modulated load signal is present. If a load signal is present, the transmitter 210 may transfer electrical power wirelessly to the receiver at the working frequency, i.e., the operating frequency. The modulation detector 406 may receive as input the filtered peak waveform signal, i.e., the detected peak signals. The transmitter control circuit 302 further comprises a timer 408 which generates the control signal based on the output of the modulation detector 406. As will be described, if the modulation detector 406 detects a receiver based on the modulated load signal, the timer 408 controls operation of a gate driver to enable the gate driver. If the modulation detector 406 does not detect a receiver based on the modulated load signal, the timer 408 controls operation of a gate driver to enable the gate driver for a portion of time, e.g., 20 mS out of 480 mS, such that the gate driver enables a switching element to which it is connected for that period of time.

The transmitter control circuit 302 may further comprise a gain circuit 405. The gain circuit 405. The gain circuit 405 may amplify the filtered peak signals and may alternatively be used as a buffer.

In the illustrated arrangement, the transmitter control circuit 302 further comprises a temperature shutdown controller 410 for shutting down the gate driver based on detection of a temperature of the transmitter control circuit 302 exceeding a threshold. The transmitter control circuit 302 further comprises overvoltage protection 412 for detecting a voltage level at the transmitter control circuit 302. If the voltage level exceeds a threshold, the overvoltage protection 412 stops the gate driver from driving the switching element.

While the transmitter control circuit 302 has been described as comprising a number of elements, one of skill in the art will appreciate other configurations are possible. For example, the transmitter control circuit 302 may only comprise the receiver detector 406 and the timer 408. The peak detector 402, filter 404, gain circuit 405, temperature shutdown controller 410 and/or overvoltage protection 412 may not be present.

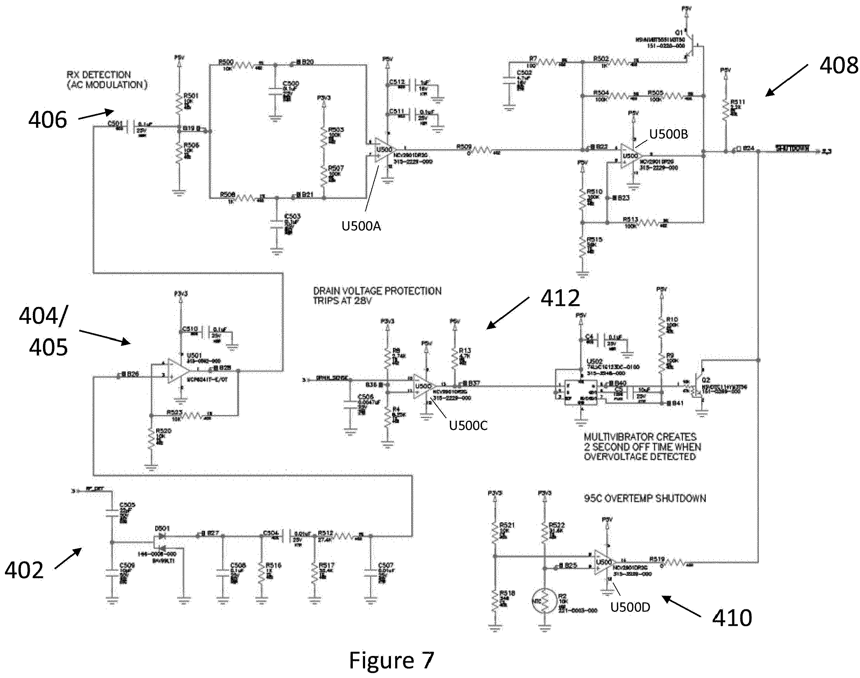

Turning now to Figure 7, a circuit diagram illustrating the transmitter control circuit 302 in more detail is shown. As shown, the peak detector 402 receives a load signal. The load signal may be close to zero if no receiver is proximate the transmitter 210, i.e., the transmitter 210 is not transferring any electrical power to any receiver. The peak detector 402 circuit comprises a voltage divider formed of capacitors C505, C509 connected in series. The voltage divider steps down the received signal. A half bridge rectifier is connected to the voltage divider. The half bridge rectifier comprises dual series switching diodes D501 which are electrically connected to the capacitors C505, C509. The half bridge rectifier rectifies the stepped down signal for peak detection. A parallel RC network is connected to the half bridge rectifier and smooths out the signal so a positive halfwave envelope of the signal is preserved. The parallel RC network comprises capacitor C508 and resistor R516 and is connected in parallel to the diodes D501. The filter 404 comprises a bandpass filter. The bandpass filter isolates the modulated signal and eliminates the DC component of the signal. The filter comprises high pass section comprising capacitor C504 and resistor R517 and low pass section comprising resistor R512 and capacitor C507. Capacitor C504 is connected in series between resistors R516, R517. Resistor R512 is connected in series between resistor R517 and capacitor C507. The peak detector 402 is electrically connected to the filter/gain stage 404/405. The isolated signal is passed through a buffer to preserve the positive half cycle. The buffer may be altered to serve as an amplifier to amplify the signal if needed.

The filter/gain stage 405 comprises operational amplifier U501. The operational amplifier U501 receives the detected peak signals of the peak detector 402 as one input (non-inverting input). The other input (inverting input) is electrically connected to resistors R520, R523 to form a non-inverting amplifier, with resistor R523 connecting the output of the amplifier to the non-inverting input of the amplifier, while resistor R520 connects the non-inverting input of the amplifier to ground. One power supply input of the operational amplifier U501 is connected to ground while the other is connected to a power source (e.g., P3V3) and to capacitor C510 , which in turn is connected to ground.

The peak detector 402 outputs peak signals. If no load signal is present, the signal will have no modulation. If a load signal is present, e.g., due to the presence of a receiver proximate the transmitter 210, modulated peak signals may be output by the peak detector.

The signal output by the filter/gain stage 404/405 is input to the receiver detector or modulation detector 406. The modulation detector 406 comprises a plurality of filters with each filter having a different frequency response, e.g., cut-off frequency. In the illustrated arrangement, the modulation detector 406 comprises two low-pass filter. Each low-pass filter has a different frequency response, e.g., cut-off frequency.

The modulation detector 406 comprises capacitor C501 and resistors R501, R506 connected in series, and both connected to one side of the capacitor C501. The capacitor C501 eliminates any DC component of the received signal. Resistors R501, R506 form a voltage divider which adds a DC bias of 2.5 V to the signal. The signal then splits into two branches to be manipulated separately. Resistors R500 and R508 are connected at the midpoint of resistors R501, R506 and operate as the resistive element of two low-pass filters, i.e., the two branches of the receiver detector 406. Capacitors C500, C503 are connected in series to resistors R500, R508, respectively, and form the capacitive component of two low-pass filters. Resisters R503, R507 connected in series are connected to the output of low pass filter combination (resistor R508 and capacitor C503).

The branch formed by resistor R500 and capacitor C500 form one branch (the top branch). This branch corresponds to a low-pass filter with a knee frequency of 159 Hz. This branch eliminates the modulated signal, e.g., 500 Hz signal, and leaves a mostly DC signal of 2.5 V. The branch formed by resistor C508 and capacitor C503 (and resistors R503, R507) form another branch (the bottom branch). The resistor C508 and capacitor C503 form a low-pass filter while the resistors R503, R507 form a pull up section. This branch leaves the modulated signal, e.g., 500 Hz signal, untouched and pulls it up.

The outputs of the two branches are connected to the inputs of a comparator, e.g., an open collector comparator U500A. Specifically, the two resistors R500, R508 are connected to the inputs into comparator U500A. One power supply input of the comparator U500A is connected to ground while the other is connected to a power source (e.g., P5V) and two capacitors C512, C511 in parallel. The comparator U500A receives the output of one filter via resistor R500 as one input, and the output of the other filter via resistor R508 as the outer input.

The comparator U500A compares the outputs of the filters. The filters are set (via the resistances of resistors R500, R508 and capacitances of capacitors C500, C503) to two different cut-off frequencies. If a load signal is present, the output of one filter contains the modulated signal, while the other does not, and the comparison at the comparator U500A results in an oscillating signal as the modulated signal rises and falls above and below the 2.5V DC signal of the other branch. If a load signal is not present, the pull up resistors R503, R507 cause the non-inverting input to be higher than the inverting input, and the comparison at the comparator U500A results in a high impedance output. The series connected resistors R503, R507 provide a predetermined offset voltage that ensures an output of comparator U500A is high impedance with no signal present. The magnitude of the offset also provides a threshold to define how large the load modulation must be, to be to be detected at the output of comparator U500A. The high (impedance) /low signal provides the input to the timer 408.

The timer 408 comprises a second comparator, e.g., an open collector comparator U500B, and several voltage divider and time constant combinations. Resistor R509 is connected to the output of the comparator U500B of the receiver detector 506. One power supply input of the comparator U500B is connected to ground while the other is connected to a power source (e.g., P5V). The non-inverting input of the comparator U500B is connected to a resistor R513, which forms the feedback loop to the comparator U500B output. The non-inverting input is also connected to the midpoint of the voltage divider comprised of resistors R510, R515 which are connected in series. The inverting input of the comparator U500B is connected to the output of the receiver detector 406 via resistor R509. The inverting input of the comparator U500B is also connected to resistors R504, R505 which are connected in series. Resistor R502, transistor Q1, which are connected in series, are connected in parallel to resistors R504, R505. Resistor R7 is connected to the inverting input of comparator U500B, and shares a common node with resistors R502, R504 and R509. Capacitor C502 is connected in series to resistor R7, and to ground. Resistor R502 is connected to transistor Q1. Transistor Q1 is further connected to power source (e.g., P5V), resistor R505, resistor R513 and the output of the comparator U500B. Specifically, transistor Q1 may be a BJT with the base connected to the comparator U500B output, the emitter connected to resistor R502, and the collector connected to the power source (e.g., P5V). The output of the comparator U500B is further connected to pull up resistor R511. In an alternate arrangement, the transistor Q1 is replaced by a diode with the cathode connected to resistor R502 and the anode connected to the output of comparator U500B.

The output of the timer 408 is a control signal (-SHUTDOWN) which is either high or low. Initially, the non-inverting input V+ to the comparator U500B is set to a voltage, e.g., 3 V, via a voltage divider comprising the parallel combination of resistors R510, R413, in series with resistor R515 (-SHUTDOWN is high). The output control signal (-SHUTDOWN) is high to enable operation of the gate driver, e.g., gate driver 354, U400, U402.

As stated, the timer 408 receives the output of the receiver detector 406. The capacitor C502 forms a relaxation oscillator and provides timing for a control signal to the gate driver, e.g., gate driver 354, U400, U402. When a load signal is present (i.e., a receiver is present), the output of the receiver detector 406 remains lower than the trip point of the timer 408, e.g., 3V initially. In particular, if the output of the receiver detector 406 is periodically LOW due to the presence of a modulated load signal, i.e., the presence of a receiver, then the capacitor C502 will not be able to charge sufficiently to have the non-inverting input V- to the comparator U500B surpass the set point at inverting input V+ and switch the timer output high to low. For example, with a 500 Hz, 50mV amplitude sine wave into the receiver detector 406, the inverting input V- does not charge high enough to trip the timer 408 according to simulations.

When a load signal is not present (i.e., a receiver is not present), the output of the receiver detector 406 is high impedance. When the output of the receiver detector 406 is high impedance, the capacitor C502 is charged through resistor R502 and transistor Q1. Once charged to the fault timer set point, the output of the relaxation oscillator switches from high to low, discharging capacitor C502 through resistors R504, R505. The capacitance of the capacitor C502, e.g., 4.7 uF, and the resistors R502, R504, R505 determine the discharge time and charge time. In the illustrated example, the capacitor C502 has a discharge time of 480 ms and a charge time of 20 ms. In particular, if the output of the receiver detector 406 is HIGH impedance due to the lack of a modulated signal, the capacitor C502 is allowed to charge through the resistor network (resistors R7, R502, R504, R505), then the inverting input V- signal will eventually surpass the set point, e.g., 3 V, and switch the output of comparator U500B low, disabling the gate drivers. At this point, with -SHUTDOWN low, the non-inverting input V+ signal changes to a lower set point based on hysteresis, e.g., 1.55V, (voltage divider with resistor R513). Now the capacitor C502 discharges through resistors R7, R504, R505 with a new time constant until the inverting input V- drops below the non-inverting input V+ of the comparator U500B.

The output of the timer 408 is the enable/disable signal to the gate driver, e.g., gate driver 354, U400, U402. If a modulated signal is detected, the control signal (-SHUTDOWN) is high and the gate driver allows a clock signal to pass through to the main switch, e.g., switching element Q400, Q401. The main switch therefore operates in the usual manner, i.e., at the operating frequency of the transmitter 210, e.g., 6.78 MHz, 13.56 MHz, or 27.12 MHz. If a modulated signal is not detected, the control signal (-SHUTDOWN) alternates between high and low based on the charge/discharge times of the capacitor C502. When the signal is high, the gate driver operates as described. When the signal is low, the gate driver is disabled and the gate signal to the switching element, e.g., Q400, Q401, goes low. The switching element does not operate. As one of skill in the art would appreciate, the control signal (-SHUTDOWN) may be configured to operate with a device that has low enable by inverting the control signal.

During the charge time, the control signal (-SHUTDOWN in Figure 7) is high, and the gate driver enables the switching element, e.g., switching element 358, Q400, Q401, such that the transmit element 222 generates a field to transfer power wirelessly to a receiver via field coupling according to the operating frequency. During the discharge time, the control signal (-SHUTDOWN) is low, and the gate driver does not enable the switching element and no field is generated by the transmit element 22.

For example, if the discharge time is 480 ms and the charge time is 20 ms, when the output of the receiver detector 406 is high, the duty cycle of the inverter 304 is 4%. When the output of the receiver detector 406 is low, i.e., a load signal is detected indicating the presence of a receiver, control signal (-SHUTDOWN) is high and the gate driver always enables operation of the switching element, i.e., the duty cycle of the inverter 304 is increased to 100%. The transmitter control circuitry 302 is accordingly able to vary the duty cycle of the inverter 304 based on detection of a load signal, i.e., based on the presence of a receiver. The load signal may be a modulated signal. In particular the load signal may be modulated at the receiver 220 as will be described.

The transmitter control circuitry 302 further comprises overvoltage protection 412. The overvoltage protection 412 detects a voltage at the transmitter control circuitry 302, e.g., a peak voltage at the inverter 304 (switch node voltage), and trips, i.e., causes shutdown of the gate driver, the gate driver. Specifically, the overvoltage protection 412 outputs a low control signal (-SHUTDOWN) to the gate driver such that switching element is open. The overvoltage protection 412 controls the gate driver when the detected voltage exceeds a pre-set threshold. In the illustrated arrangement, the pre-set threshold is 28V.

The protection circuit 412 comprises an open collector comparator U500C which receives the stepped down peak voltage of the inverter switch drain node (e.g. 358) at the inverting input. The inverting input of the comparator U500C is electrically connected to capacitor C506, which is connected to ground. The non-inverting input of the comparator U500C is electrically connected at the midpoint of the voltage divider comprised of resistors R4, R8 which are connected in series.

One power supply input of the comparator U500C is connected to ground while the other is connected to a power source (e.g., P5V). Resistor R13 is connected to a power source (e.g., P5V) and to the output of the comparator U500C functions as a pull up resistor. The output of the comparator U500C is connected to one-shot multivibrator U502 which generates an off (low) signal to gate driver based on the comparator U500C detecting a voltage level over a set point, e.g., 28 V, at the inverter 304. The multivibrator U502 is electrically connected to capacitor C4 at its direct reset Low, the supply pin, and positive-edge triggered input. The active HIGH output of the multivibrator U502 is connected to transistor Q2 via resistors which are indicated as having resistances of 10K and 47K ohms. The external capacitor terminal of the multivibrator U502 is connected to capacitor C5 which is connected to resistors R9, R10 in series. Resistors R9, R10 are also connected to the external resistor terminal of the multivibrator U502. Resistors R9, R10 and capacitor C5 set the duration of a pulse output by multivibrator U502 when triggered.

The one-shot multivibrator U502 functions as a re-triggerable latch to allow time for the conditions that tripped the overvoltage protection 412 to clear. Without the one-shot multivibrator U502, in a continued fault case, such as metal in proximity to the transmitter element 224 as described, the clearing of the fault (disabling the gate drivers) would then clear the overvoltage fault signal and the inverter 304 would be allowed to drive the switches once again. However, this may immediately re-trip the overvoltage protection 412 which could cause damage if this cycle is allowed to continue. One of skill in the art will recognize that the one-shot multivibrator U502 could be replaced by another device, such as a 555 timer, and provide the same functionality.

One of skill in the art will appreciate that the detected voltage level being 28V is exemplary and other voltage values may be used depending on electrical component values and/or transmitter/receiver operating conditions.

The temperature shutdown controller 410 comprises a voltage divider comprised of resistors R521, R518 connected in series, and resistor R522 and NTC thermistor R2 connected in series, forming a second voltage divider. The midpoints of these two pairs of components are connected to the inverting and non-inverting inputs, respectively, of a comparator U500D. The output of the comparator U500D is connected to resistor R519. One power supply input of the comparator U500D is connected to ground while the other is connected to a power source (e.g., P5V).

The NTC thermistor R2 detects a temperature of a printed circuit board (PCB) of the transmitter control circuitry 302. If the temperature exceeds a threshold value, e.g., 95 degrees Celsius, the output of the comparator U500D is low (off), and the gate driver is not driven such that switching element is open. Accordingly, the transmit element 222 does not generate a field for wireless power transfer.

Figure 7 includes various particular values of the components identified. For example, resistor R500 is identified as having a resistance of 10000 ohms. This, and other values, are presented for illustrative purposes only, and are not to be taken as limiting. Further, the NTC thermistor R2 may be a PTC thermistor and placed in an alternate configuration.

In operation, the transmitter control circuitry 302 varies the duty cycle of the inverter 304 based on detection of a load signal which indicates the presence of a receiver proximate to the transmitter 210. The peak detector 402 receives the load signal as input and outputs stepped down peaks from the signal. The filter 404 isolates the signal with a bandpass filter centred on the expected modulation frequency. The gain circuit 405 amplifies the detected peak signal measured from the transmitter 210. The signal at this stage may be a modulated signal at the expected modulation frequency, or may be constant (i.e., no modulation is present). The filtered and amplified peaks are then fed into the receiver detector 406. If a modulated load signal is present, e.g., a load signal modulated by a receiver proximate the transmitter 210, the receiver detector 406 detects a receiver. That is to say the signal which is passed through the plurality of filters of the receiver detector 406 sees the modulated signal attenuated on one side, while the other contains the modulated signal. The output of the open collector comparator U500A of the receiver detector 406 is low due to the comparison of the signals from the filters and the presence of the capacitor C502 of the timer 408 (fault timer) restricting instantaneous voltage changes. If no receiver is present, the outputs of the filters are both DC and constant, and the output of the first comparator U500A is high impedance due to the pull up combination of resistors R503, R507 on the non-inverting input. Thus, when a receiver is not present, the output of the first comparator U500A and of the receiver detector 406 is high impedance.

The high impedance output signal allows the capacitor C502 of the timer 408 to charge via resistor R502 in parallel with series resistors R504, R505. The charging and discharging of the capacitor C502 acts as a relaxation oscillator which enables and then disables the gate driver via the control signal (-SHUTDOWN). The gate driver drives the switching element when the gate driver is enabled and does not drive the switching element when the gate driver is disabled. When the switching element is driven by the gate driver, the switching element is switching at the working frequency of the transmitter 210, and the transmit element 222 generates a field for wireless power transfer to a receiver. If the receiver is not present, the gate driver only enables switching element operation for a portion of time, hence the inverter 304 has a duty cycle of less than 100%. In the illustrated arrangement when a receiver is not detected, i.e., a load signal is not detected, the duty cycle is 4%. Otherwise, the duty cycle is 100% (the load signal is detected).

The low output signal from comparator U500A, when a modulated load signal is detected by the receiver detector due to the modulated signal being present on one channel of the plurality of filters, does not allow the capacitor C502 to charge. Thus, the control signal (-SHUTDOWN) enables the gate driver to drive the switching element to switch at the working frequency. In this state, the transmit element generates a field to transfer power to the receiver which creates the modulated load signal which is detected by to the transmitter 210 over the wireless link 230. Thus, upon detection of a modulated load signal the duty cycle is varied (increased) from 4% (in the illustrated embodiment) to 100%. Once the receiver is no longer detected, i.e., the modulated load signal is no longer detected, the duty cycle is varied (decreased) from 100% to 4% (in the illustrated embodiment).

In this way, the transmitter 210 does not generate a field continuously unless a receiver is detected. Average power transfer efficiency is therefore improved, and power usage at the transmitter 210 is reduced as the gate driver is not always enabled and the switching element is not constantly driven unless a receiver, i.e., a modulated load signal is detected.

Returning now to Figure 3, the circuitry 224 of the receiver 220 comprises input stage 312, rectifier 314 and receiver control circuit or circuitry 316. The receiver control circuitry 316 is for controlling operation of the receiver 220 by modifying operation of the receiver 220 to vary a load signal at the receiver 220. The receiver control circuitry 316 may modify operation of the rectifier 314 or input stage 312 to vary a load signal at the receiver 220. Specifically, the receiver control circuitry 316 draws a current or applies a load to the input or output of the rectifier 314 to vary the load signal at the receiver 220. Alternatively, or additionally, the receiver control circuitry 316 could draw a current or apply a load to another component of the receiver 220. The receiver control circuitry 316 varies the load signal in a periodic manner such that the load signal has a particular modulation frequency.

The input stage 312 and rectifier 314 have been previously described. The receiver control circuitry 316 is electrically connected to the rectifier 314 which is electrically connected to the input stage 312.

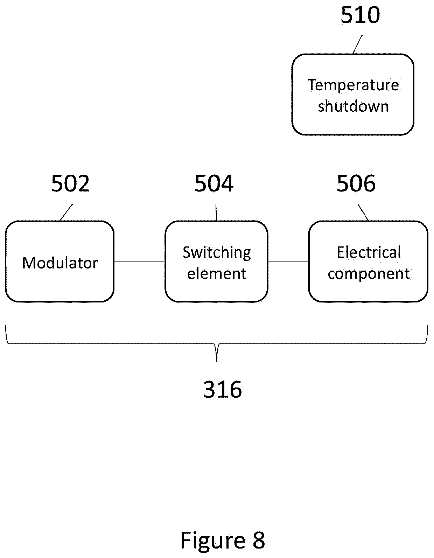

Turning now to Figure 8, a block diagram of the features or elements of the receiver control circuitry 316 are shown. The receiver control circuitry 316 comprises a modulator 502 for generating a modulation signal, a switching element 504 which is operated, i.e., switches between open and closed, by the modulation signal output by the modulator 502, and an electrical component 506 electrically connected to the switching element 504 and to the rectifier 314.

In the illustrated arrangement, the receiver control circuitry 316 comprises a modulator 502 for generating a load modulation signal according to a pre-set frequency, a switching element 504 for controlling a load or current drawn to an electrical component 506. The modulator 502 is electrically connected to the switching element electrically 504 which is electrically connected to the electrical component 506. The modulator 502 outputs a load modulation signal which controls operation of the switching element 504. The switching element 504 open and closes the connection to the electrical component 506 to ground thereby varying the load or current drawn by the electrical component 506. The varying load or current results in a varying load at the receiver 220. This load varies according to the frequency of the modulator 502. The frequency may be pre-set and based on electrical component values of the circuit elements of the receiver control circuitry 316. The frequency may be communicated to transmitter control circuitry 302. The frequency may be communicated via Wi-Fi, Bluetooth or some other communication protocol or standard. As one of skill in the art will appreciate, the frequency may be static. Further, no communication of the frequency may be necessary.

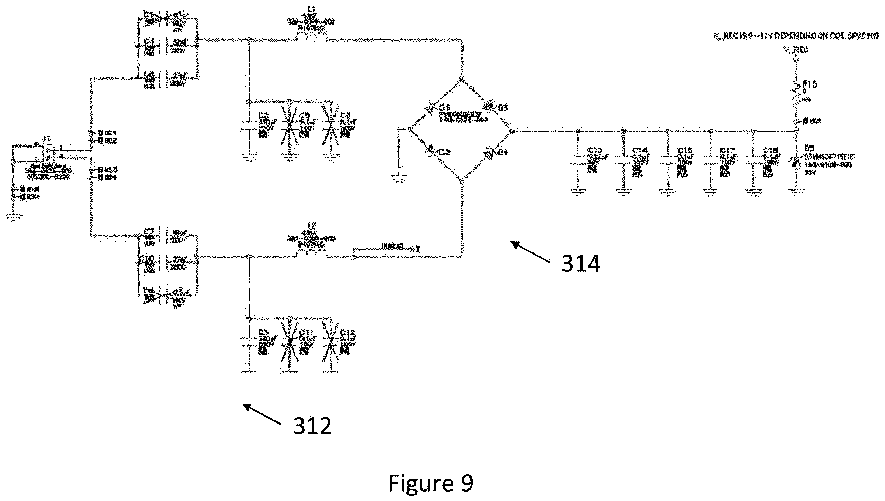

Turning now to Figure 9, a schematic diagram of the input stage 312, and the rectifier 314 is illustrated. The input stage 312 comprises a connection (wire-to-board header) J1. One output of the connector J1 is connected to capacitors C1, C4, C8 which are connected together in parallel. In this arrangement of receiver 220, the input connections of J1 are connected to the receive element 229, e.g., coil, of the receiver 220. The capacitors C1, C4, C8 are connected to inductor L1. Capacitors C2, C5, C6 are connected between inductor L1 and capacitors C1, C4, C8. Capacitors C2, C5, C6 are connected in parallel. Another output of connector J1 is connected to capacitors C7, C10, C9 which are connected together in parallel. The capacitors C7, C10, C9 are connected to inductor L2. Capacitors C3, C11, C12 are connected between inductor L2 and capacitors C7, C10, C9. Capacitors C3, C11, C12 are connected in parallel. The rectifier 314 comprises of a full bridge diode rectifier. Inductors L1, L2 are connected to diode rectifier which comprises diodes D1, D2, D3, D4 connected a full bridge rectifier topology. The output of the diode rectifier is connected to capacitors C13, C14, C15, C17, C18 which are all connected in parallel. Diode D5 is connected in parallel to capacitors C13, C14, C15, C17, C18, and resistor R15 is connected in series to the parallel combination of capacitors C13, C14, C15, C17, C18. Diode D5 may be a Zener diode.

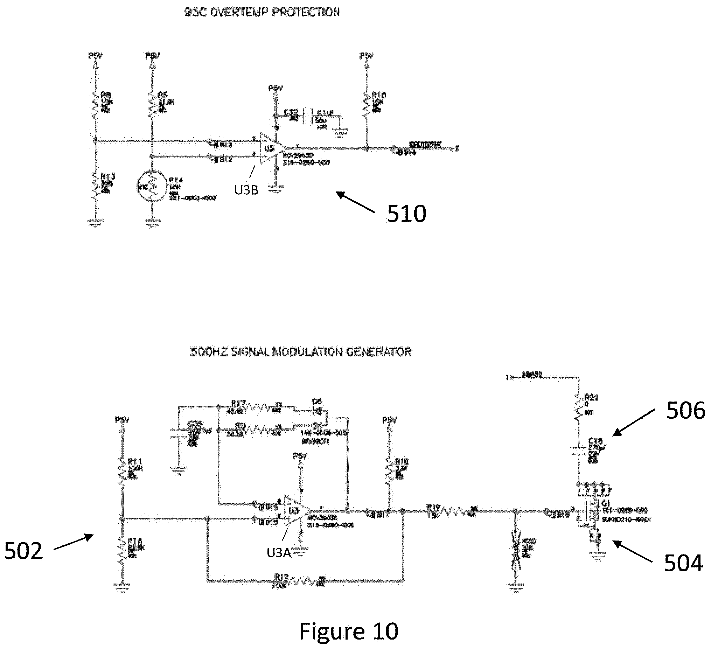

The receiver control circuitry 316 is connected to the rectifier 314 at an input of the diode rectifier. Turning now to Figure 10, the receiver control circuitry 316 is illustrated in more detail. The receiver control circuitry 316 is electrically connected to the rectifier 314. The receiver control circuitry 316 comprises modulator 502, switching element 504, electrical component 506 and temperature shutdown controller 510.

The modulator 502 comprises resistors R11, R16 connected in series to form a voltage divider. The midpoint of the resistors R11, R16 is connected to the non-inverting input of comparator U3A. The inverting input of the comparator U3A is connected to capacitor C35 and to resistors R17, R9. Capacitor C35 is connected to ground. Resistors R17 and R9 are connected to switching diode D6. Specifically, resistor R17 is connected to cathode of top diode D6, and resistor R9 is connected to anode of bottom diode D6. The anode of top diodes D6 and the cathode of bottom diode D6 are connected to the output of the comparator U3A. One power supply input of the comparator U3A is connected to ground while the other is connected to a power source (e.g., P5V). The output of the comparator U3A is further connected to resistor R19 and to resistor R18, which is a pull up resistor. Resistor R20 is connected to resistor R19 and to ground. The common node of resistors R19, R20 is connected to the gate of switching element 504.

The switching diode D6 is described as a single package which includes two diodes, e.g., a top and bottom diode. One of skill in the art will appreciate that the switching diode D6 could be replaced by separate individual diodes connected in the manner described.

The modulator 502 generates a load modulation signal according to a pre-set frequency. In the illustrated arrangement, the modulation frequency is 500 Hz, but other frequency values may be used. For applications that utilize modulation frequencies much higher than 500 Hz, a gate driver may be used to operate the switching element 504 of the modulator 502. The modulator 502 is electrically connected to the switching element 504 electrically which is electrically connected to the electrical component 506. The modulator 502 outputs a load modulation signal to control operation of the switching element 504 to close the connection to the electrical component 506 in according to the pre-set frequency. In the illustrated arrangement, the pre-set frequency is 500 HZ, i.e., a period of 2 ms. Thus, the switching element 504 is switched (from open to close and back again) every 2 ms. Thus, the electrical component 506 draws a current for 2 ms, then does not draw a current for 2 ms. The cycle repeats so long as the modulator 502 is outputting its modulated signal.

In operation, the modulator 502 creates a periodic series of pulses using an implementation of a relaxation oscillator circuit. The comparator U3A compares the voltages presented at its inverting and non-inverting terminals. When the voltage at the non-inverting terminal of comparator U3A is greater than the voltage at the inverting terminal, capacitor C35 charges through the upper diode of D6 and resistor R17. Capacitor C35 is connected to the inverting terminal of comparator U3A. While charging, the voltage across capacitor C35 increases. When the voltage across capacitor C35 exceeds the voltage at the non-inverting terminal, the output of comparator U3A will transition LOW and capacitor C35 will begin to discharge through resistor R9 and the lower diode of D6. In this way, modulator 502 operates as a pulse generator with its output duty cycle defined by the charge and discharge characteristics of capacitor C35 through diode/resistor D6/R17 and diode/resistor D6/R9 respectively. The set points of the charge and discharge cycles are based on the hysteresis set by the combination of resistors R11, R15 and R12.

The switching element 504 comprises transistor Q1. The gate terminal of the transistor Q1 is connected to the output of the modulator 502 such that the modulator 502 controls operation of the transistor Q1. The electronic component 506 comprises capacitor C16 electrically connected in series to resistor R21. When the switching element 504 is closed as controlled by the modulation signal, e.g., a high signal, from the modulator 502, the capacitor C16 is loaded thereby drawing power from the input of the rectifier 314. When the switching element 504 is open as controlled by the modulation signal, e.g., no signal or a low signal, from the modulator 502, the capacitor C16 is not loaded, thereby drawing no power from the rectifier 314. The load at the receiver control circuitry 316 (receiver 220) varies according to the pre-set frequency as power is drawn or not drawn depending on the modulation signal output.

While a particular configuration of the switching element 504 and electrical component 506 have been described, one of skill in the art will appreciate other configurations are possible. For example, in another configuration the electrical component 506 comprises a resistor connected at an output of the rectifier via the switching element 504. The modulator 502 controls the load applied to the resistor via control of the switching element 504 in the manner described.

In the illustrated arrangement, the temperature shutdown controller 510 is implemented as circuitry. The temperature shutdown controller 510 comprises resistors R8, R13 connected in series, and resistor R5 and thermistor R14 connected in series. The midpoints of these two pairs of components are connected to the inverting and non-inverting inputs, respectively, of a comparator U3B. One power supply input of the comparator U3B is connected to ground while the other is connected to a power source (e.g., P5V) and to capacitor C32, which is connected to ground. The output of the comparator U3B is connected to resistor R10, which is configured as a pull up resistor. The output of the comparator U3B is a control signal (-SHUTDOWN) to shutdown operation of the receiver 220 and/or the receiver control circuitry 316. The shutdown signal may stop a signal being extracted by the receive element 229 of the receiver 220 if the control signal (-SHUTDOWN) is communicated to the transmitter 210 and/or stop the rectifier 314 from rectifying a received signal. The control signal (-SHUTDOWN) may also stop another device of the receiver 220, such as a DC/DC converter, from outputting a power signal to a load.

In operation, the NTC thermistor R14 detects a temperature of critical receiver components which is measured by the receiver control circuitry 316. If the temperature exceeds a threshold value, e.g., 95 degrees Celsius, the output of the comparator U3B is low (off) and the receive element 229 does not receive any electrical power. Additionally, or alternatively, the output of the comparator U3B may cause a DC/DC converter of the receiver 220 to disable and stop outputting power. The receiver 220 may still receive power up to that point. The receive element 229 and rectifier 314 may still receive power, but with no load current. Further, the temperature shutdown controller 510 may communicate the output of the comparator U3B with the transmitter 210. For example, the controller 510 may communicate with the transmitter 210 via Wi-Fi or Bluetooth. In response, the transmitter 210 may stop power transfer to the receiver, e.g., by disabling the transmit element 224. Accordingly, the receiver 220 does not extract power if it overheats.

While a particular configuration of the receiver control circuit 316 has been described, one of skill in the art will appreciate variations are possible. For example, the temperature shutdown controller 510 may not be present.

Figures 9 and 10 include various particular values of the components identified. For example, capacitor C2 is identified as having a capacitance of 330 pF. This, and other values, are presented for illustrative purposes only, and are not to be taken as limiting.

The described transmitter control circuitry 302 and receiver control circuitry 316 may be incorporated in a transmitter and receiver of a wireless power transfer system.

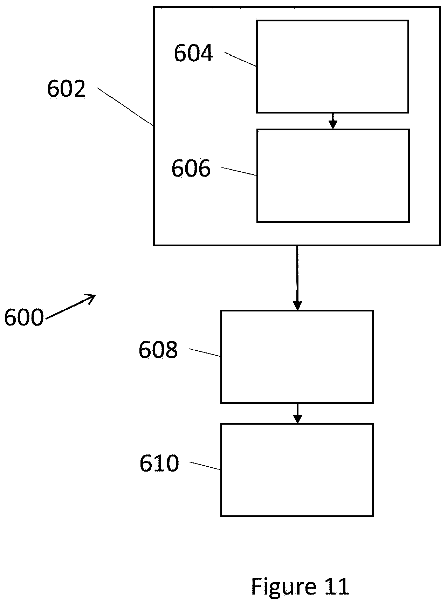

Turning now to Figure 11, a flowchart of a method 600 of controlling a transmitter, e.g., transmitter 210. The method 600 comprises detecting 602 a load signal, e.g., a modulated load signal. The load signal may be fed to the peak detector 402, which is then fed to the bandpass filter 404, which is then fed to the gain stage 405 which may amplify the filtered peak detected signal. The peaks are then input into receiver detector 406. Detecting 602 the load signal comprises filtering 604 the load signal in a plurality of lowpass filters, e.g., the detected peaks in the load signal, and then comparing 606 the outputs of the filters. As described the receiver detector 406 filters the received peaks. One lowpass filter has a cut-off frequency above the expected modulation frequency, while another lowpass filter has a cut-off frequency below the expected modulation frequency. Thus, one signal will contain the modulation frequency, while the other will notcut-off. A comparator, e.g., an open collector comparator, then detects a difference in the outputs and outputs a signal which is received by timer 408. If the modulation frequency is not present the comparator will output will present a high impedance. If the modulation frequency is present the comparator output will oscillate between high (impedance) and low at the modulation frequency.

The method 600 then further comprises resetting 608 the timer 408 based on the comparison. If a difference is detected, the timer 408 is reset such that the control signal to the gate driver is always driving the gate driver to operate the switching element, i.e., enable the switching element to operate at the working frequency. If the modulation frequency is not detected, the timer 408 is not reset and the capacitor C502 in the timer 408 charges and discharges thereby only operating the gate driver for a portion of time. Thus, the duty cycle of the inverter 304 is varied between a full duty cycle upon detection of a modulated load signal indicating the presence of a receiver, and a reduced duty cycle, e.g., 4%, when no modulated load signal is detected which indicates no receiver is present proximate the transmitter 210. Thus, the method 600 further comprises operating 610 the gate driver, e.g., gate drivers Q400, Q402, to drive switching elements, e.g., Q400, Q401, based on the output of the timer, e.g., a timer signal.

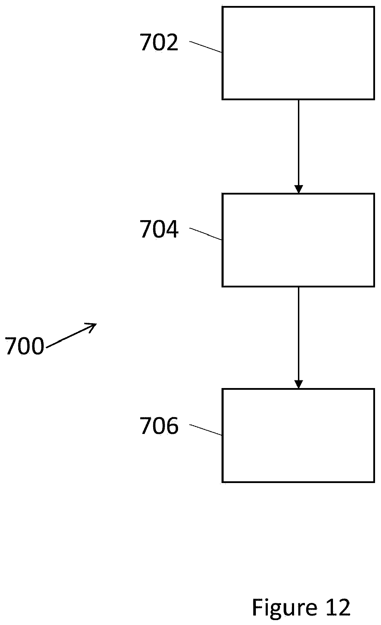

Turning now to Figure 12, a flowchart of a method 700 of controlling a receiver, e.g., receiver 220 is illustrated. The method 700 comprises generating 702 a modulation signal via the modulator 502. The modulator 502 generates a periodic waveform to control 704 operation of the switching element 504. Operation of the switching element 504 is controlled 704 with the modulation signal output by the modulator 502. The switching element 504 alternates between open and closed based on the modulation signal. The method 700 further comprises drawing 706 current via the closed connection at the switching element 504. Specifically, when the switching element 504 is closed, the capacitor C15 draws a current to charge the capacitor C15. The drawn current modifies the load signal at the receiver 220. When the modulator signal output by the modulator 502 does not operate the switching element 504, the switching element 504 is opened. When the switching element 504 is opened, the capacitor C15 no longer draws a current. The load signal is not modified during this time period. Thus, the load signal is modified during a time period, and not modified during another time period. The alternating signal modification time period corresponds to the frequency of the modulator 502 which is 500 Hz in this case. The result is a modulated load signal output by the receiver 220.

The modulated load signal is detected by the transmitter control circuitry 302 which varies the duty cycle of the inverter, e.g., increases the duty cycle to 100%, when the modulated load signal is detected to transfer power to the wireless power transfer system. When the modulated load signal is no longer detected, the transmitter control circuitry 302 varies the duty cycle of the inverter, e.g., reduces the duty cycle to 4%, to reduce average power consumption and wear on components. In this manner, average power consumption is reduced and average power transfer efficiency is improved when compared with operation of a switching element having a duty cycle of 100% at the transmitter at all times regardless of whether a receiver is present.

Each individual feature described herein is disclosed in isolation and any combination of two or more features is disclosed to the extent that such features or combinations are capable of being carried out based on the present specification as a whole in the light of the common general knowledge of one of skill in the art, irrespective of whether such features or combination of features solve any problems disclosed herein, and without limitation to the scope of the claims. Aspects of the disclosure may consist of any such individual feature or combination of features. In view of the foregoing description it will be evident to one of skill in the art that various modifications may be made within the scope of the disclosure.

It should be understood that the examples provided are merely exemplary of the present disclosure, and that various modifications may be made thereto.

## Claims

1. Transmitter control circuitry for controlling a duty cycle of an inverter of a transmitter of a wireless power transfer system based on detection of a load signal at the transmitter.

2. The circuitry of claim 1, wherein the circuitry is configured to control the duty cycle of the inverter based on detection of the load signal at a particular frequency.

3. The circuitry of claim 1 or 2, comprising:
a detector for detecting the load signal, and optionally wherein the detector comprises a plurality of filters, each filter of the plurality of filters having a different frequency response, and further optionally wherein one of the plurality of filter has a frequency response greater than a modulation frequency of the load signal, and another of the plurality of filters has a frequency response less than a modulation frequency of the load signal.

4. The circuitry of claim 3, comprising:
a timer for outputting a control signal for controlling operation of the switching element based on detection of the load signal, the timer electrically connected to the detector; and optionally further comprising at least one of:
a gate driver for outputting a gate signal to enable operation of the switching element based on the control signal, the gate driver electrically connected to the timer; and
an overvoltage detector for detecting a voltage level at the circuitry, and optionally wherein the overvoltage detector is electrically connected to the gate driver, the overvoltage detector configured to control operation of the gate driver based the voltage level exceeding a threshold.

5. The circuitry of any preceding claim, wherein the load signal comprises a modulated load signal modulated at a particular frequency.

6. A transmitter for transferring power to a receiver of a wireless power transfer system, the transmitter comprising:
an inverter;
a transmit element for generating a field for wirelessly transferring electrical power to a receiver of a wireless transfer system, the transmit element electrically connected to an output of the inverter; and
the transmitter control circuitry of any preceding claim for controlling a duty cycle of the inverter based on detection of a load signal at the transmitter, and optionally wherein the transmit element is electrically connected to an output of the switching element.

7. A method of controlling operation of a transmitter of a wireless power transfer system, the method comprising:
controlling a duty cycle of an inverter of a transmitter of a wireless power transfer system based on detection of a load signal at the transmitter.

8. The method of claim 7, wherein controlling the duty cycle comprises:
controlling the duty cycle of the inverter based on detection of a load signal having a pre-set frequency at the transmitter, and optionally wherein the method further comprises detecting the load signal, and further optionally wherein detecting comprises filtering the load signal at a plurality of filters.

9. The method of claim 7 or 8, further comprising:
controlling the duty cycle based on a timer, and optionally:
wherein the method further comprises resetting the timer based on detection of the load signal; and/or
wherein controlling the duty cycle comprises controlling operation of a gate driver electrically connected to the switching element, and further optionally wherein controlling operation of the gate driver comprises:
controlling operation of the gate driver based on a control signal output by the timer.

10. Receiver control circuitry for controlling operation of a receiver of a wireless power transfer system, the circuitry modulating a load of a receiver of a wireless power transfer system.

11. The circuitry of claim 10, the circuitry configured to draw current from an input of a rectifier of the receiver to modulate the load signal.

12. The circuitry of claim 10 or 11, wherein the circuitry comprises:
an electrical component electrically connected to an input or an output of a rectifier of the receiver.

13. The circuitry of claim 12, wherein the electrical component comprises:
a capacitor electrically connected to an input of the rectifier, and optionally wherein the circuitry further comprises:
a switching element electrically connected to the capacitor, the switching element for selectively loading the capacitor according to a pre-set frequency to modulate a load signal at the receiver, and further optionally wherein the electrical component comprises:
a resistor electrically connected to an output of the rectifier, and still further optionally wherein the circuitry further comprises:
a switching element electrically connected to the resistor, the switching element for controlling loading at the resistor according to a pre-set frequency to vary a load signal at the receiver.

14. A receiver of a wireless power transfer system for receiving electrical power wirelessly, the receiver comprising:
a rectifier for rectifying a power signal extracted from a transmitter of a wireless power transfer system; and
the receiver control circuitry of any of claims 10 to 13 electrically connected to the rectifier for modulating a load of the receiver.

15. A method of controlling operation of a receiver of a wireless power transfer system, the method comprising:
modulating a load at a receiver of a wireless power transfer system.

16. The method of claim 15, wherein modulating the load comprises:
drawing current from the input or output of the rectifier to vary the load.

17. The method of claim 16, wherein drawing current comprises:
controlling operation of a switching element electrically connected to an electrical component at an input or an output of the rectifier, and optionally:
wherein the electrical component comprises a capacitor electrically connected to an input of the rectifier or a resistor electrically connected to an output of the rectifier; and/or
wherein modulating comprises controlling operation of the switching element according to a pre-set frequency to vary a load at the receiver.

18. A wireless power transfer system comprising:
a transmitter for transferring power to a receiver of the wireless power transfer system, the transmitter comprising:
an inverter;
a transmit element for generating a field for wirelessly transferring electrical power to a receiver of a wireless transfer system; and
transmitter control circuitry for controlling a duty cycle of the inverter based on detection of a load at the transmitter; and
a receiver of a wireless power transfer system for receiving electrical power from the transmitter, the receiver comprising:
a rectifier for rectifying a power signal extracted from a transmitter of a wireless power transfer system;
a receive element for extracting electrical power from the generated field, the receive element electrically connected to an input of the rectifier; and
receiver control circuitry electrically connected to the rectifier for controlling operation of a receiver of a wireless power transfer system, the circuitry modifying operation of the rectifier to vary the load.
